# EUROPÄISCHE PATENTANMELDUNG

(11) **EP 3 852 048 A1**
(43) Date of publication of application: **21.07.2021**
(21) Application number: 19906342.1
(22) Date of filing: 26.12.2019
(51) Int. Cl.: G06Q 50/18

(54) **PATENT STRATEGY CHART GRAPHIC REPRESENTATION METHOD, DIGITAL SYSTEM FOR ASSISTING IN GRAPHIC REPRESENTATION OF PATENT STRATEGY CHART, PATENT STRATEGY CHART, PATENT STRATEGY CHART GENERATION METHOD, MANAGEMENT SYSTEM, COMPUTER PROGRAM, AND PATENT STRATEGY CHART COMPONENT**

(30) Priority: 28.12.2018 JP 2018248975
(71) Applicant: Kudo, Hiroshi, Tokyo 134-0088 (JP)
(72) Inventor: Kudo, Hiroshi, Tokyo 134-0088 (JP)
(74) Representative: Grünecker Patent- und Rechtsanwälte PartG mbB
(86) International application number: PCT/JP2019/051179
(87) International publication number: WO 2020/138312

(57) **Abstract**

In the patent map of the related art, an inclusion relation or an association of embodiments with respect to the scope of patent claims was not capable of being expressed. The embodiments are expressed by a point, an arbitrary figure that can be approximate to a point, or the like (a first display), and the scope of the patent claims is expressed by an approximate fan shape (a second display). In a case where a patentee of one patent is identical to a practitioner of one embodiment, a center angle of the approximate fan shape (the second display) representing the scope of the patent claims is disposed to overlap with the point or the like (the first display) representing the embodiments or to be in a position close thereto. Here, when there are a plurality of approximate fan shapes (the second displays), the plurality of approximate fan shapes (the second displays) are radially disposed. On the other hand, in a case where the practitioner is a third party, when the embodiments are included in the scope of the patent claims, the point or the like (the first display) representing the embodiments is disposed to be positioned inside the approximate fan shape (the second display) representing the scope of the patent claims, and when the embodiments are not included in the scope of the patent claims, the point or the like (the first display) representing the embodiments is disposed to be positioned outside the approximate fan shape (the second display) representing the scope of the patent claims. At this time, in a case where there is a small difference, the first display is disposed at a short distance from the second display, and in a case where there is a large difference, the first display is disposed at a long distance from the second display.

## Description

### TECHNICAL FIELD

The present invention relates to a technology for graphically representing an inclusion relation and/or an association of embodiments with respect to the scope of patent claims by a figure or the like, and relates to a method for visually expressing a relationship between the scope of the patent claims and the embodiments, with a crow's nest view of the relationship, a system for assisting the method, a chart to be prepared by the method, a method for generating the chart, a management system for product-related information and patent-related information, using the chart, a computer program for continuously displaying a plurality of charts as an animation video, and a patent strategy chart component.

### BACKGROUND ART

It is an extremely important matter of concern for a research and development company, a research institution, or the like to grasp a technical trend or a competitor company associated with business, in technical development. For this reason, searching information accumulated in a patent information database by setting a constant condition and numerically grasping the tendency of collected patent information by analyzing the patent information have been performed from the related art. In particular, as means for grasping a situation by associating number information, date information such as an application date, and various information items such as an applicant and a patentee with stylized technical information that is obtained from a classification code or a keyword in a text relevant to a technical content, various charts referred to as a patent map have been proposed.

As a method for preparing a patent map or the like, a practical guide of a basic preparation method (NON PATENT LITERATURE 1) has been published, and computer software for preparing a patent map has also been commercially available and has already been in widespread use. In addition, for example, the invention of a new device or a new method such as a data display device that is capable of simply performing analysis for each classification code (PATENT LITERATURE 1), and an analysis method for reducing a preparation effort (PATENT LITERATURE 2) has been disclosed and sophisticated. Further, recently, a term of an "IP landscape" has become widespread, an analysis result in which patent information such as a patent map and market information, company information, and the like are combined has tended to be overviewed and actively utilized in the planning and developing of a management strategy or a business strategy such as M&A (NON PATENT LITERATURE 2).

### CITATION LIST

### PATENT LITERATURE

PATENT LITERATURE 1: JP 2011-090535 A
PATENT LITERATURE 2: JP 2015-018529 A

### NON PATENT LITERATURE

NON PATENT LITERATURE 1: "Introduction to Patent Information Analysis and Patent Map Preparation for Attaining Trinity of Management Strategy (Revised Edition)", Written by Atsushi Nozaki, Published by Japan Institute for Promoting Invention and Innovation, November 1, 2016
NON PATENT LITERATURE 2: "Latest Trend of Patent Information -Evolution of Artificial Intelligence, IP Landscape, and Patent Search Database-, Atsushi Nozaki, Japio YEAR BOOK 2018, p60-68, 2018

### SUMMARY OF INVENTION

### TECHNICAL PROBLEM

In a case where a management strategy or a business strategy was planned and developed, it was general to use a map relevant to an application trend or a technical trend that was obtained by extracting patent information from a considerable number of patent groups and by analyzing the patent information, in accordance with an information processing technology. On the other hand, in the consideration of business potentiality of a new project, it is an indispensable important response for a business operator of a company or the like to investigate a risk of infringing a patent right of a third party by embodiments that are being assumed and to ensure patent safety, from the viewpoint of ensuring business stability. In the case of considering such a response, there are a plurality of competitive products that are manufactured and sold by the third party or a plurality of patents that are held by the third party, which often causes a complicated situation. Information that is a material for business decision by suitably grasping such a complicated situation is extremely important.

However, in general, such a complicated situation was extremely cumbersome, and it was difficult to intuitively grasp the situation for a short period of time. A relationship between the scope of patent claims and embodiments is not obvious only from bibliographic information and text information of patent publication, and progress information of patent application, and text information of a patent filing document relevant to examination. Specific information relevant to the embodiments is indispensable. In addition, even in a case where such a complicated situation was obvious by the investigation, it was difficult to convey the situation to a person other than an investigator, and it was insufficient to express the situation to be intuitively graspable for a short period of time even by the patent map of the related art.

The patent map of the prior art is a deliverable obtained by analyzing only information on the patent side such as patent bibliographic information and publication text information, as an information source, and is a document for grasping a general tendency or for predicting a trend, as a main object. That is, the patent map of the prior art in the related art was not a deliverable obtained by using an ability for understanding a configuration requirement of a patented invention that was literally expressed and for thinking about the right or wrong of embodiments thereof.

In order to understand each relationship and to share the recognition, it is necessary to consider the configuration requirement of the patented invention that was literally expressed and the embodiments, on a one-to-one basis, and in the related art, a result thereof was expressed by a language. Further, for the material for business decision, it is necessary to consider not only a one-to-one relationship but also a one-to-plural relationship or a plural-to-plural relationship. In a case where there is no step of expressing the plural-to-plural relationship to be comprehensively graspable, in addition to a step of expressing the one-to-one relationship by a language, a deliverable until the situation is conveyed to a person other than the investigator is not capable of being attained. In such a step, there was no established method.

### SOLUTION TO PROBLEM

Therefore, in order to solve such problems described above, the present inventors of the present invention have created an invention with the following characteristics. The present invention is a method for graphically representing a relationship between a patented invention and embodiments, in consideration of the concept of the embodiments, and has technical thought that is fundamentally different from the patent map of the related art.

The present invention is [1] a patent strategy chart graphic representation method, including: a) a group display generating step of generating a group display in which a first display representing embodiments and a second display representing a scope of patent claims are grouped; b) a two-dimensional plane display generating step of generating a two-dimensional plane display with an arbitrary index as coordinates; and c) a group display disposing step of disposing and displaying the group display on the two-dimensional plane display by reflecting product information associated with the embodiments, in which the first display includes at least one of a character and a figure, the second display has an approximate fan shape, and the patent strategy chart represents an inclusion relation and/or an association of the embodiments with respect to the scope of the patent claims.

At this time, [2] d) a peripheral situation displaying step of displaying a third display representing a peripheral situation relevant to the embodiments on the two-dimensional plane display may be further included.

Next, the present invention is [3] a digital system for assisting a patent strategy chart graphic representation, including: a) a group display generation unit that generates a group display in which a first display representing embodiments and a second display representing a scope of patent claims are grouped; b) a two-dimensional plane display generation unit that generates a two-dimensional plane display with an arbitrary index as coordinates; and c) a group display disposition unit that disposes and displays the group display on the two-dimensional plane display by reflecting product information associated with the embodiments, in which the first display includes at least one of a character and a figure, the second display has an approximate fan shape, and the patent strategy chart represents an inclusion relation and/or an association of the embodiments with respect to the scope of the patent claims.

In addition, the present invention is [4] a patent strategy chart representing an inclusion relation and/or an association of embodiments with respect to a scope of patent claims, the chart including: a first display representing the embodiments; a second display representing the scope of the patent claims; and a two-dimensional plane with an arbitrary index as coordinates, in which the first display includes at least one of a character and a figure, and the second display has an approximate fan shape, and is [5] a patent strategy chart generation method, the patent strategy chart including a first display representing embodiments, a second display representing a scope of patent claims, and a two-dimensional plane with an arbitrary index as coordinates, the method including: a) a group display generating step of generating a group display in which the first display and the second display are grouped; b) a two-dimensional plane display generating step of generating the two-dimensional plane; and c) a group display disposing step of disposing and displaying the group display on the two-dimensional plane by reflecting product information associated with the embodiments, in which the first display includes at least one of a character and a figure, the second display has an approximate fan shape, and the patent strategy chart represents an inclusion relation and/or an association of the embodiments with respect to the scope of the patent claims.

Further, the present invention is [6] a management system for product-related information of a plurality of practitioners and patent-related information of a plurality of patentees and patent applicants, the system including: a database that links a first display with the product-related information including information relevant to one or two or more selected from the group consisting of a manufacturer, a raw material, a component configuration, and a structure, stored in another application, links a second display with the patent-related information including application information, progress information, registration information, or publication information, stored in another application, and further processes the product-related information and the patent-related information, in a patent strategy chart displayed by a digital unit including the first display representing embodiments, the second display representing a scope of patent claims, and a two-dimensional plane with an arbitrary index as coordinates, in which the first display includes at least one of a character and a figure, and the second display has an approximate fan shape.

Further, the present invention is [7] a computer program for producing an animation video of a patent strategy chart representing an inclusion relation and/or an association of embodiments with respect to a scope of patent claims, in which the patent strategy chart includes a first display representing the embodiments, a second display representing the scope of the patent claims, and a two-dimensional plane with an arbitrary index as coordinates, the first display includes at least one of a character and a figure, the second display has an approximate fan shape, and a change relevant to a position, a size, and a direction of the first display and the second display on the two-dimensional plane is continuously displayed as an animation video, on a plurality of patent strategy charts prepared a plurality of times over time with respect to a predetermined technical field.

Further, the present invention is [8] a patent strategy chart component based on a collage technique or a paste technique, in which a first member having a ship shape and one or two or more second members having a fan shape are disposed and linked such that the first member having a ship shape is in contact with a center angle of the second member having a fan shape, and a fan-shaped circular arc of the second member having a fan shape is not in contact with the first member having a ship shape.

### ADVANTAGEOUS EFFECTS OF INVENTION

The present invention relates to a technology for graphically representing an inclusion relation and/or an association of embodiments with respect to the scope of patent claims by a figure or the like, and relates to a method for visually expressing a relationship between the scope of the patent claims and the embodiments, with a crow's nest view of the relationship, a system for assisting the method, a chart to be prepared by the method, a method for manufacturing the chart, a management system for product-related information and patent-related information, using the chart, a computer program for continuously displaying a plurality of charts as an animation video, and a patent strategy chart component. Accordingly, in the planning and developing of a business strategy of a company or the like, there are a plurality of specific competitive products of a third party or a plurality of specific patents of the third party, and the entire image of a complicated situation thereof can be intuitively grasped for a short period of time.

### BRIEF DESCRIPTION OF DRAWINGS

FIG. 1 is an elementary diagram of a two-dimensional figure (code) representing a scope of a single patent claim for a patent right that is possessed by the same person and embodiments associated therewith.
FIG. 2 is an elementary diagram of a two-dimensional figure (symbol) representing a scope of a single patent claim for a patent right that is possessed by the same person and embodiments associated therewith.
FIG. 3 is an elementary diagram of a two-dimensional figure (code) representing a scope of a single patent claim for a patent right that is possessed by the same person and embodiments associated therewith.
FIG. 4 is an elementary diagram of a two-dimensional figure (figure with a ship motif) representing a scope of a single patent claim for a patent right that is possessed by the same person and embodiments associated therewith.
FIG. 5 is an elementary diagram of a two-dimensional figure (figure with a ship motif) representing a scope of a plurality of overlapping patent claims for a patent right that is possessed by the same person and embodiments associated therewith.

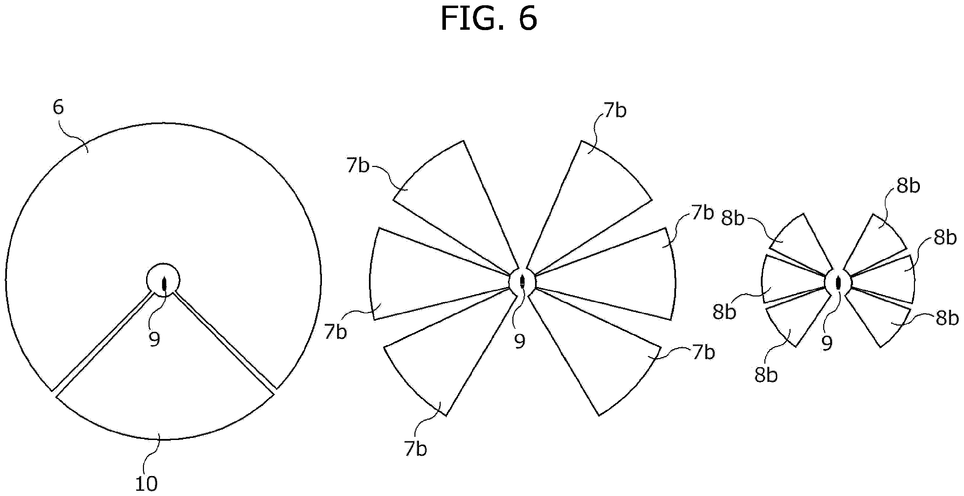

FIG. 6 is an example of a two-dimensional figure (figure with a ship motif) representing a scope of patent claims for a plurality of patent rights that are possessed by the same person and embodiments associated therewith.

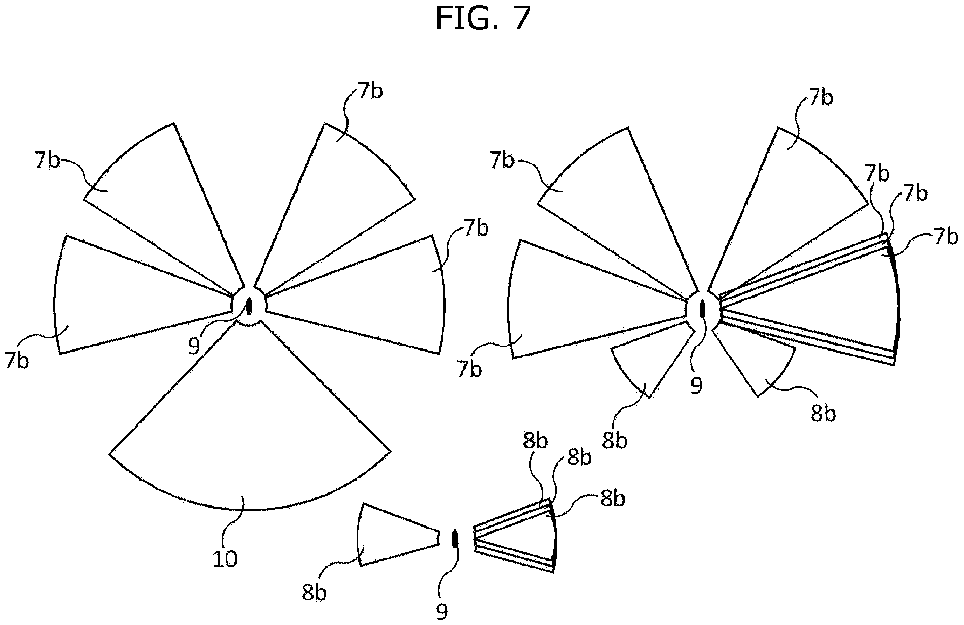

FIG. 7 is an example of a two-dimensional figure (figure with a ship motif) representing a scope of partially overlapping patent claims for a plurality of patent rights that are possessed by the same person and embodiments associated therewith.
FIG. 8 is an example of a plane for disposing a two-dimensional figure representing a scope of patent claims and embodiments, in which coordinates including two coordinate axes are provided.
FIG. 9 is an example of a plane for disposing a two-dimensional figure representing a scope of patent claims and embodiments, in which coordinates including two coordinate axes are provided.
FIG. 10 is an example of a plane for disposing a two-dimensional figure representing a scope of patent claims and embodiments, in which coordinates including two coordinate axes are provided.
FIG. 11 is an example of a plane for disposing a two-dimensional figure representing a scope of patent claims and embodiments, in which coordinates including two coordinate axes are provided.
FIG. 12 is an example of a plane for disposing a two-dimensional figure representing a scope of patent claims and embodiments, in which coordinates including two coordinate axes are provided.
FIG. 13 is an example of a plane for disposing a two-dimensional figure representing a scope of patent claims and embodiments, in which coordinates including an overlap in a plurality of similar rectangles are provided.
FIG. 14 is an example of a plane for disposing a two-dimensional figure representing a scope of patent claims and embodiments, in which coordinates including concentric semicircles are provided.
FIG. 15 is an example of a plane for disposing a two-dimensional figure representing a scope of patent claims and embodiments, in which coordinates including concentric semicircles are provided.
FIG. 16 is an example of a plane for disposing a two-dimensional figure representing a scope of patent claims and embodiments, in which coordinates including concentric circles are provided.
FIG. 17 is an example of a plane for disposing a two-dimensional figure representing a scope of patent claims and embodiments, in which coordinates including concentric circles are provided.
FIG. 18 is a chart in which a two-dimensional figure (figure with a ship motif) representing a scope of a plurality of patent claims and embodiments is disposed on a plane in which coordinates including two coordinate axes are provided.
FIG. 19 is a chart in which a two-dimensional figure (figure with a ship motif) representing a scope of a plurality of patent claims and embodiments is disposed on a plane in which coordinates including two coordinate axes are provided.
FIG. 20 is a chart in which a two-dimensional figure (figure with a ship motif) representing a scope of a plurality of patent claims and embodiments is disposed on a plane in which coordinates including concentric semicircles are provided.
FIG. 21 is product-related information of an ophthalmic solution for an allergy that is OTC drugs.
FIG. 22 is an example of analytical work of a target patent.
FIG. 23 is an example of a graphic representation in which an approximate fan shape representing a scope of patent claims and a point representing embodiments or a character, a figure, or the like that can be approximate to a point are linked.
FIG. 24 is a patent strategy chart prepared through analytical work and drawing work (a case example in which shogi board type coordinates are set).
FIG. 25 is a patent strategy chart prepared through analytical work and drawing work (a case example in which 4-split matrix type positioning chart coordinates are set).
FIG. 26 is a conceptual diagram of a database that is manipulated by being linked to a patent strategy chart.
FIG. 27 is an image diagram of a patent strategy chart around the year 2000 in the field of PET bottled green tea beverages.
FIG. 28 is an image diagram of a patent strategy chart around the year 2005 in the field of PET bottled green tea beverages.
FIG. 29 is an image diagram of a patent strategy chart around the year 2010 in the field of PET bottled green tea beverages.
FIG. 30 is an image diagram of a patent strategy chart around the year 2016 in the field of PET bottled green tea beverages.

### DESCRIPTION OF EMBODIMENTS

Hereinafter, a patent strategy chart graphic representation method, a digital system for assisting a patent strategy chart graphic representation, a patent strategy chart, a patent strategy chart generation method, a management system, a computer program, and a patent strategy chart component of an embodiment of the present invention (hereinafter, this embodiment) will be described with reference to the drawings. The embodiment described below is merely an example for easily understanding the present invention, and does not limit the present invention. That is, it is obvious that the matters described below can be changed and improved without departing from the gist of the present invention, and the present invention includes equivalents thereof.

### <Definition>

Hereinafter, the meaning of terms described in the scope of patent claims of the present application will be described. A "point or a character, a figure, or the like that can be approximate to a point" as a first display may be a character or a figure and a combination thereof that are sufficiently small to be arbitrarily moved such that the disposition is changed in the entire chart set by a two-dimensional plane or two-dimensional coordinates, and the shape thereof is not particularly limited. The first display, for example, may be a point with the naked eye, a figure such as a circle, a triangle, a quadrangle, and a rhombus, an illustration with an object motif, such as a code, a symbol, and a ship, and a mark or a logo of a company or the like.

An "approximate fan shape representing a scope of patent claims" as a second display may be a figure that is used for expressing the scope of the patent claims by a two-dimensional figure, and includes a fan shape, a figure obtained by removing a small fan shape from a large fan shape in two fan shapes sharing the center angle of the fan shape with different areas (an annular fan shape), and a figure such as a trapezoid that approximates to the figure or a trapezoid that approximates to a shape in which a plurality of figures are collected.

"Grouping" indicates that the first display (the point representing the embodiments or the character, the figure, or the like that can be approximate to the point) and the second display (the approximate fan shape representing the scope of the patent claims) are associated with each other to be disposed in a close position, and the mutual position is relatively fixed. A group of the first display (the point representing the embodiments or the character, the figure, or the like that can be approximate to the point) and the second display (the approximate fan shape representing the scope of the patent claims) is defined as a "group display" . A group of a plurality of figures (the group display) can be regarded as one figure, and the position can be moved, rotated, or inverted in the two-dimensional plane or the two-dimensional coordinates.

In the grouping, information representing constituents of a product is extracted from product information, and then, information of constituents of the scope of the patent claims is extracted, and in a case where there are a coincidence and an inclusion relation in such two groups, the "point representing the embodiments or the character, the figure, or the like that can be approximate to the point" (the first display) and the "approximate fan shape representing the scope of the patent claims" (the second display) are associated with each other. Here, in a case where Technical Field, Technical Problem, Solution to Problem, and Effects of Invention in the patent are not associated with the product, the first display and the second display are not combined (are not grouped) . Note that, in a case where there is no patent right associated with one embodiment (an implemented product or the like), a case where the second display is not associated with the first display is also assumed, but even such a case is also included in the grouping in a broad sense.

An "arbitrary index" is not particularly limited insofar as the arbitrary index can be an index represented by a coordinate axis in the setting of coordinates. The arbitrary index may be a quantitative index that is represented by a number, such as time, quantity, or a ratio, or may be a qualitative index that is represented from the viewpoint of technical characteristics, from the viewpoint of a legal jurisdiction, or from the viewpoint of being used in framework such as business or marketing. Examples of the qualitative index that is represented from the viewpoint of being used in the framework such as business or marketing include, an approximate increase or decrease in an index number such as the degree of importance, the degree of urgency, the degree of interest, superiority, profitability, prospectiveness, rarity, difficulty in imitation, attainability, workability, necessity, talkability, an economic value, and market share, and the like, but the qualitative index is not limited thereto.

In addition, the coordinates are regionally divided by attribute that can be used in a positioning map or product portfolio management (for example, a flower shape, a money tree, a bad boy and a loser, and a breadwinner, a golden egg, a good value, and clearance goods), and the arbitrary index may be an index that is suitably and newly devised to correspond thereto.

### <Patent Strategy Chart>

A "patent strategy chart (also simply referred to as a "chart")" is a diagram illustrating the inclusion relation and/or the similarity of the embodiments with respect to the scope of the patent claims by using a figure. The word origin is a chart in a broad sense, and the chart also indicates a marine chart or an aerial chart. The chart indicates concept that is different from a map indicating a cartograph, or landscape indicating paysage, scenery, or topography, from the viewpoint of including detailed information of an element that is prepared in order for sailing navigation or flying navigation and varies . Herein, the chart indicates a novel diagram that is discriminated from the existing patent map or IP landscape in the patent industry.

That is, the patent strategy chart representing the inclusion relation and/or the association of the embodiments with respect to the scope of the patent claims according to this embodiment is a patent strategy chart including a first display representing embodiments, a second display representing a scope of patent claims, and a two-dimensional plane with an arbitrary index as coordinates, in which the first display includes at least one of a character and a figure, and the second display has an approximate fan shape.

One embodiment (for example, an implemented product) is expressed by the "point or the character, the figure, or the like that can be approximate to the point" (the first display) . The details of the shape of the figure or the like that can be approximate to the point are not limited insofar as the outer circumstance is connected, and thus, the figure is recognized as one figure, and the figure may be a point with the naked eye, a figure such as a circle, a triangle, a quadrangle, and a rhombus, an illustration with an object motif, such as a code, a symbol, and a ship, and a mark or a logo of a company or the like.

The "approximate fan shape representing the scope of the patent claims" (the second display) may be drawn only by an outline, may be a filled shape without an outline, or may be drawn by using both of the outline and the fill. Here, the outline is not limited to a solid line, and may be various line types such as a dotted line, a broken line, a dash-dot-dash line, a dash-dot-dot-dash line, and a multiple line, or may be an arbitrary color, an arbitrary width, and an arbitrary transparency. A gradation may be applied with an arbitrary color, an arbitrary width, and an arbitrary transparency. In addition, the fill may be a plain color, may be subjected to an arbitrary pattern or an arbitrary design, or may be an arbitrary color and an arbitrary transparency.

The size of the "approximate fan shape representing the scope of the patent claims" (the second display) can be displayed with an arbitrary area by changing a radius length and the size of the center angle. The radius length can be arbitrarily set on the chart. In addition, the size of the center angle can be indicated as means for expressing a large number of constituents and the variety thereof, and can be 1° to 360°. For example, in a case where the constituents are capable of including various embodiments by a higher conceptual wording, the center angle of the approximate fan shape representing the scope of the patent claims may be 180° to 270°. On the contrary, in a case where all of the constituents are limited to specific aspects described in examples by a lower conceptual wording, the center angle of a two-dimensional figure such as the fan shape representing the scope of the patent claims is 30° to 90°, which can also be discriminated from the case of using the higher conceptual wording.

In order to avoid complexity and to increase visibility, for example, the radius length of the second display can be divided into three levels of "Long", "Medium", and "Short", the size of the center angle can be divided into two levels of "Wide Angle" and "Narrow Angle", and the size of the approximate fan shape representing the scope of the patent claims (the second display) can be divided into six levels by combining the levels. Here, it is important that a difference in the levels is easy to recognize. A specific length and a specific size of an angle are arbitrarily set in consideration of a balance from the entire image of the chart every time the chart is prepared.

The "point representing the embodiments or the character, the figure, or the like that can be approximate to the point" (the first display) and the "approximate fan shape representing the scope of the patent claims" (the second display) are disposed on the two-dimensional plane.

In a case where a patentee or an applicant of one patent is identical to a practitioner of one embodiment, the center angle of a circular arc of the second display (the approximate fan shape representing the scope of the patent claims) is disposed to overlap with the first display (the point representing the embodiments or the character, the figure, or the like that can be approximate to the point) or to be in a position close thereto. Here, when there are a plurality of second displays (approximate fan shapes representing the scope of the patent claims), the plurality of second displays are radially disposed in order to maximally avoid an overlap.

On the other hand, in a case where the practitioner is a third party, when the embodiments are included in the scope of the patent claims, the first display (the point representing the embodiments or the character, the figure, or the like that can be approximate to the point) is disposed to be positioned inside the second display (the approximate fan shape representing the scope of the patent claims), and when the embodiments are not included in the scope of the patent claims, the point or the like representing the embodiments (the first display) is disposed to be positioned outside the approximate fan shape representing the scope of the patent claims (the second display). At this time, in a case where there is one constituent that is not included in the embodiments, the first display is disposed at a short distance, and is disposed at a long distance as the number of constituents that are not included in the embodiments increases.

In order to easily discriminate a distance between the figures, a circular auxiliary line with a center on the "point representing the embodiments or the character, the figure, or the like that can be approximate to the point" (the first display) may be provided. In addition, in order to conceptually represent a range that is recognized as a competitor for a manufacturer of a product that is positioned on the center of the circle, the circular auxiliary line with a center on the "point representing the embodiments or the character, the figure, or the like that can be approximate to the point" (the first display) may be provided. The auxiliary line may be various line types such as a solid line, a dotted line, a broken line, a dash-dot-dash line, a dash-dot-dot-dash line, and a multiple line, or may be an arbitrary color, an arbitrary width, and an arbitrary transparency. A gradation may be applied with an arbitrary color, an arbitrary width, and an arbitrary transparency.

When there is an overlap in the plurality of "approximate fan shapes representing the scope of the patent claims" (second displays), or a mutual distance decreases, it is indicated that configuration requirements of such a patented invention have high similarity. For example, an invention having different categories in the same patent, a divisional application derived from the same patent application, and the like are exemplified. On the contrary, when the distance in the plurality of "approximate fan shapes representing the scope of the patent claims" (second displays) increases, it is indicated that the configuration requirements of the patented invention have low similarity.

Coordinates including one or two or more coordinate axes, two or more concentric circles, or two or more concentric polygons may be provided on the plane in which the two-dimensional figure is disposed. In addition, in general, a contour line, a fathom curve, a coastal line, an ocean current, and a line representing a tidal current and an ocean route, which can be used in a topographical chart or a marine chart, an arrow, a code, and the like may be described. Further, the position and the size of the two-dimensional figure including a point may be represented by a coordinate value.

### <Patent Strategy Chart Component>

When the patent strategy chart is graphically represented, and the first display or the second display is disposed on the two-dimensional plane, the disposition can be considered by using the patent strategy chart component using a sticky note, a model, a piece, and pattern paper.

That is, the patent strategy chart component according to this embodiment is a patent strategy chart component based on a collage technique or a paste technique, in which a first member having a ship shape and one or two or more second members having a fan shape are disposed and linked such that the first member having a ship shape is in contact with a center angle of the second member having a fan shape, and a fan-shaped circular arc of the second member having a fan shape is not in contact with the first member having a ship shape.

### <Patent Strategy Chart Graphic Representation Method>

The patent strategy chart can be graphically represented on the basis of the patent strategy chart graphic representation method according to this embodiment.

The patent strategy chart graphic representation method according to this embodiment is a patent strategy chart graphic representation method including a) a group display generating step of generating a group display in which a first display representing embodiments and a second display representing a scope of patent claims are grouped, b) a two-dimensional plane display generating step of generating a two-dimensional plane display with an arbitrary index as coordinates, and c) a group display disposing step of disposing and displaying the group display on the two-dimensional plane display by reflecting product information associated with the embodiments, in which the first display includes at least one of a character and a figure, the second display has an approximate fan shape, and the patent strategy chart represents an inclusion relation and/or an association of the embodiments with respect to the scope of the patent claims.

At this time, it is preferable to include d) a peripheral situation displaying step of displaying a third display representing a peripheral situation relevant to the embodiments on the two-dimensional plane display.

### <Digital System>

It is preferable that the patent strategy chart is graphically represented by using the digital system according to this embodiment.

The digital system for assisting a patent strategy chart graphic representation according to this embodiment is a digital system including a) a group display generation unit that generates a group display in which a first display representing embodiments and a second display representing a scope of patent claims are grouped, b) a two-dimensional plane display generation unit that generates a two-dimensional plane display with an arbitrary index as coordinates, and c) a group display disposition unit that disposes and displays the group display on the two-dimensional plane display by reflecting product information associated with the embodiments, in which the first display includes at least one of a character and a figure, the second display has an approximate fan shape, and the patent strategy chart represents an inclusion relation and/or an association of the embodiments with respect to the scope of the patent claims.

### <Patent Strategy Chart Generation Method>

The patent strategy chart can be generated on the basis of the patent strategy chart generation method according to this embodiment.

The patent strategy chart generation method according to this embodiment is a patent strategy chart generation method, the patent strategy chart including a first display representing embodiments, a second display representing a scope of patent claims, and a two-dimensional plane with an arbitrary index as coordinates, the method including a) a group display generating step of generating a group display in which the first display and the second display are grouped, b) a two-dimensional plane display generating step of generating the two-dimensional plane, and c) a group display disposing step of disposing and displaying the group display on the two-dimensional plane by reflecting product information associated with the embodiments, in which the first display includes at least one of a character and a figure, the second display has an approximate fan shape, and the patent strategy chart represents an inclusion relation and/or an association of the embodiments with respect to the scope of the patent claims.

Note that, two-dimensional charts prepared on the basis of information at different times are display in parallel in chronological order or are continuously displayed in the manner of animation, and thus, a change in the subsisting situation of the patent, the embodiments, or the like is easily intuitively grasped for a short period of time. An animation video that continuously displays a plurality of charts of the present invention is also defined as being included in the chart of the present invention.

A computer program using the existing information processing technology can be used for producing and displaying the animation video, and the present invention includes the computer program. For example, the computer program may be a program using a function such as image switching, animation, or slide show that is installed in software of Microsoft (Registered Trademark) Office, or may be software for video production with high expertness that is a program using the existing or further software.

### <Computer Program>

That is, the computer program according to this embodiment is a computer program for producing an animation video of a patent strategy chart representing an inclusion relation and/or an association of embodiments with respect to a scope of patent claims, in which the patent strategy chart includes a first display representing the embodiments, a second display representing the scope of the patent claims, and a two-dimensional plane with an arbitrary index as coordinates, the first display includes at least one of a character and a figure, the second display has an approximate fan shape, and a change relevant to a position, a size, and a direction of the first display and the second display on the two-dimensional plane is continuously displayed as an animation video, on a plurality of patent strategy charts prepared a plurality of times over time with respect to a predetermined technical field.

### <Management System>

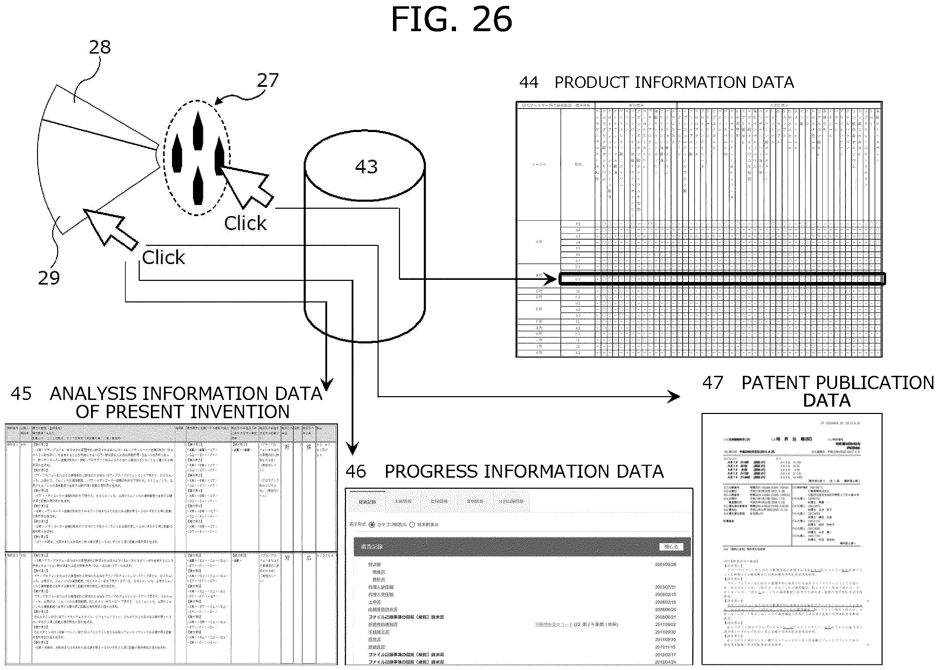

In addition, as illustrated in FIG. 26 described below, the management system according to this embodiment is a management system for product-related information of a plurality of practitioners and patent-related information of a plurality of patentees and patent applicants, the system including a database that links a first display with the product-related information including information relevant to one or two or more selected from the group consisting of a manufacturer, a raw material, a component configuration, and a structure, stored in another application, links a second display with the patent-related information including application information, progress information, registration information, or publication information, stored in another application, and further processes the product-related information and the patent-related information, in a patent strategy chart displayed by a digital unit including the first display representing embodiments, the second display representing a scope of patent claims, and a two-dimensional plane with an arbitrary index as coordinates, in which the first display includes at least one of a character and a figure, and the second display has an approximate fan shape.

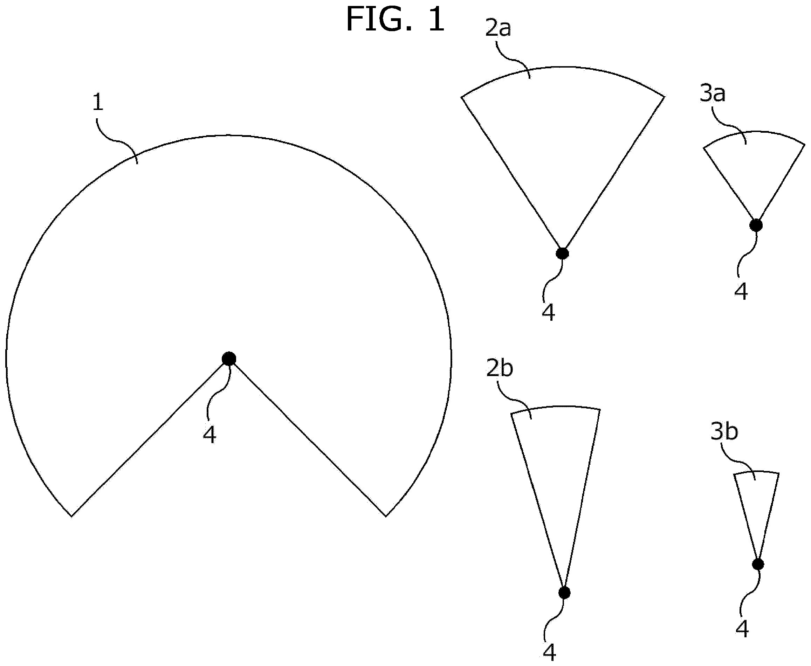

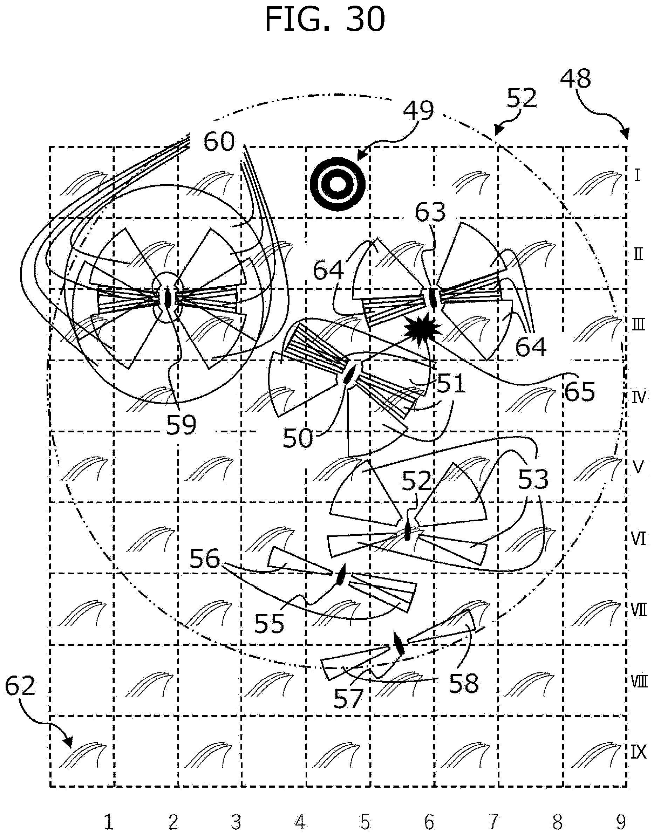

Hereinafter, Example 1 to Example 5 will be described as a mode for implementing the present invention, on the basis of FIG. 1 and FIG. 30, but the present invention is not limited to such examples.

### [Example]

### <Example 1: Example in Which Two-Dimensional Figure Representing Scope of Plurality Patent Claims and Embodiments Is Disposed on Plane in Which Coordinates Including Two Coordinate Axes Are Provided>

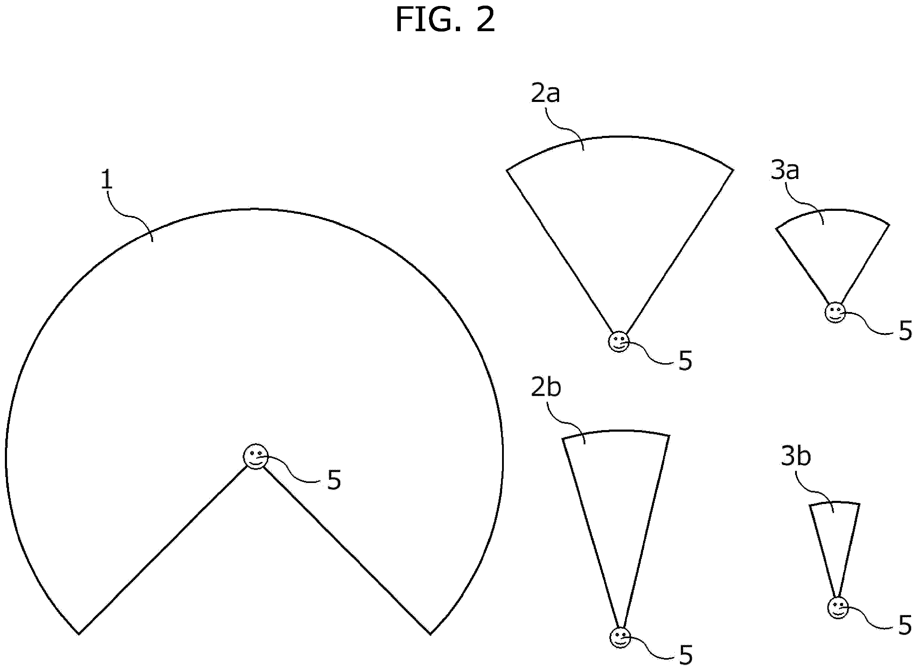

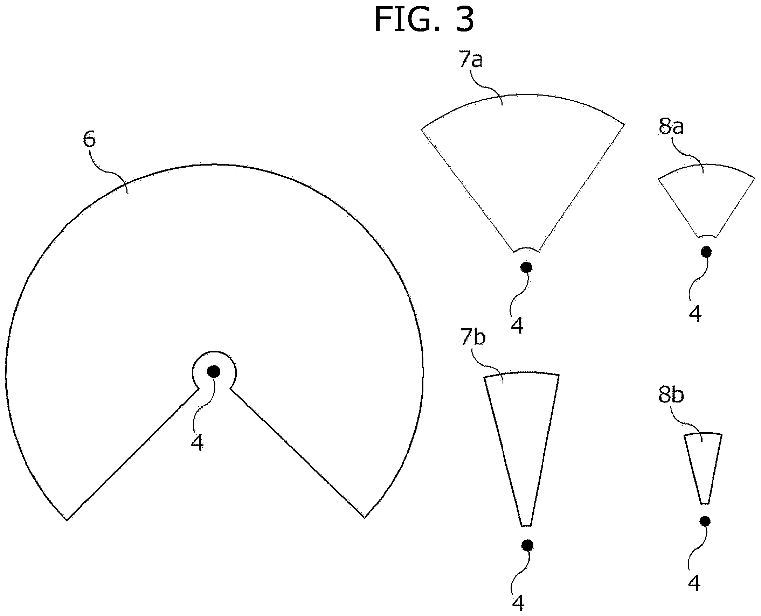

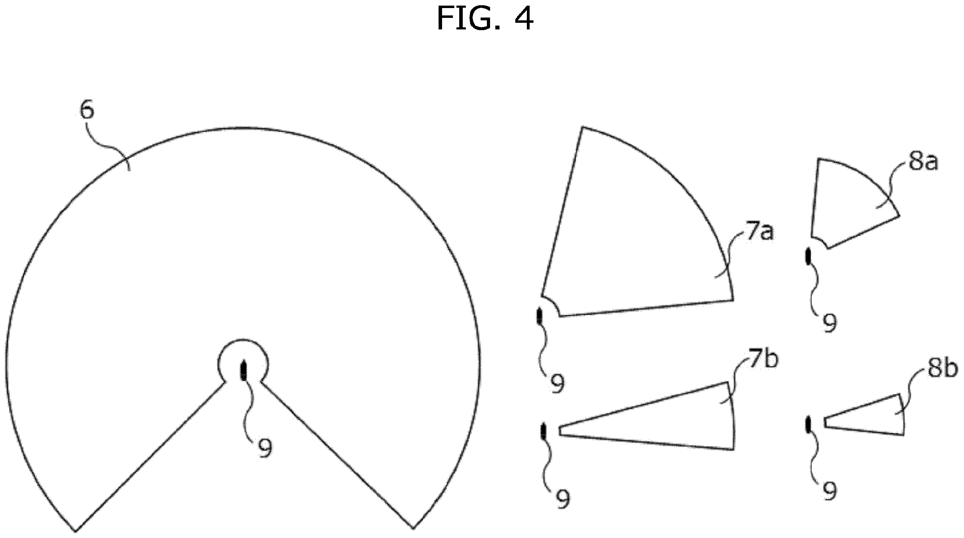

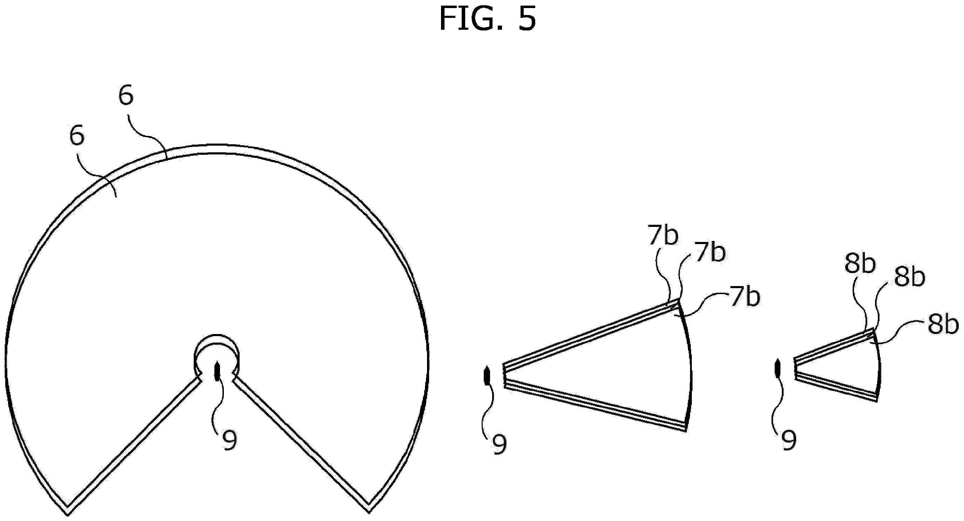

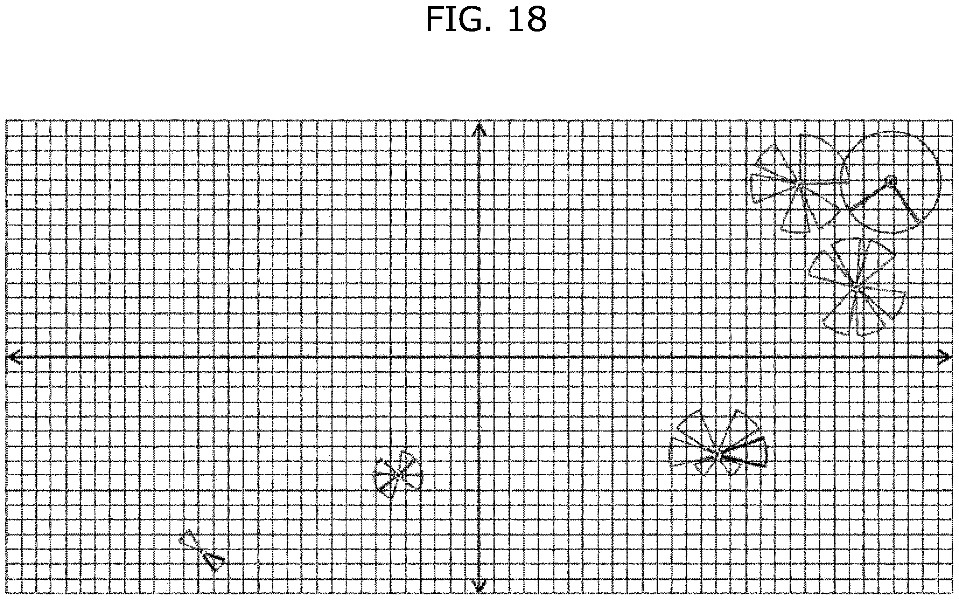

A chart graphically representing an inclusion relation and/or an association of embodiments with respect to the scope of a plurality of patent claims (a patent strategy chart) is illustrated in FIG. 18. The inclusion relation and/or the association of the embodiments with respect to the scope of the plurality of patent claims can be expressed by a combination of elementary diagrams of a two-dimensional figure representing the scope of a single patent claim and embodiments associated therewith, illustrated in FIG. 1 to FIG. 5. One approximate fan shape representing the scope of the patent claims (one second display) is drawn corresponding to one invention. One invention indicates a group including one independent claim in the scope of the patent claims and one or two or more dependent claims depending therefrom. There is a case where a patented invention overlaps in an invention having different categories in the same patent, an invention of a divisional application derived from the same patent application, and an invention with an improvement relationship, and thus, in such a case, the approximate fan shape representing the scope of the patent claims (the second display) is drawn in an overlapping manner. A high position and a low position are considered in accordance with a method for setting the coordinates, and thus, the approximate fan shape representing the scope of the patent claims (the second display) and the point representing the embodiments or the character, the figure, or the like that can be approximate to the point (the first display) associated therewith are disposed, in consideration of reflecting an increase or decrease in the position.

### <Example 2: Example in Which Two-Dimensional Figure Representing Scope of Plurality Patent Claims and Embodiments Is Disposed on Plane in Which Coordinates Including Two Coordinate Axes Are Provided>

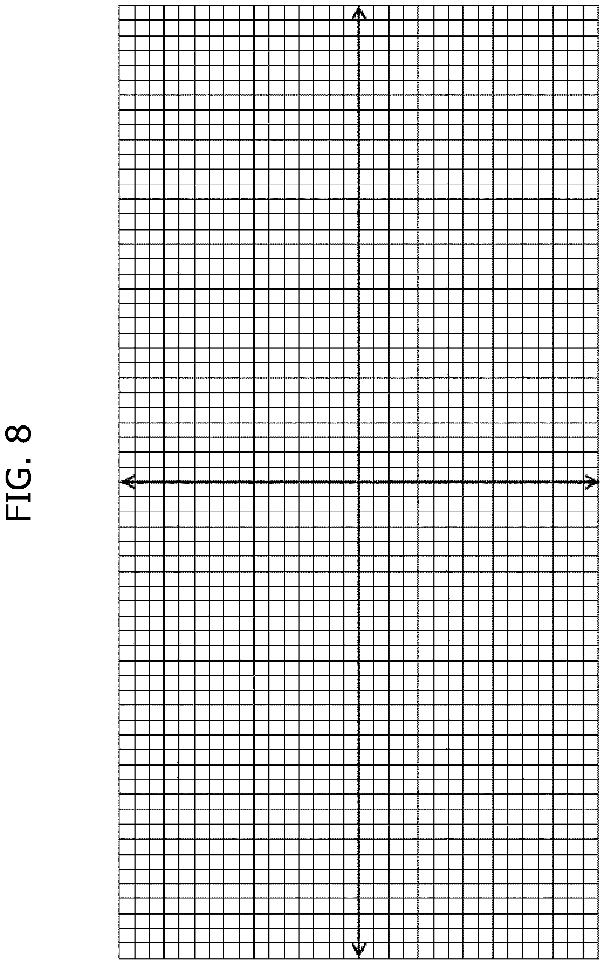

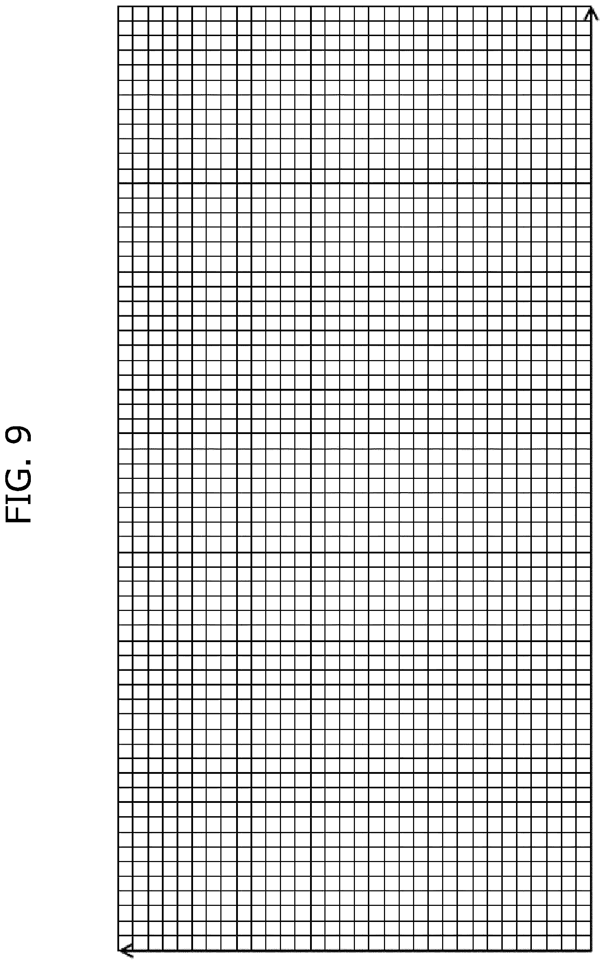

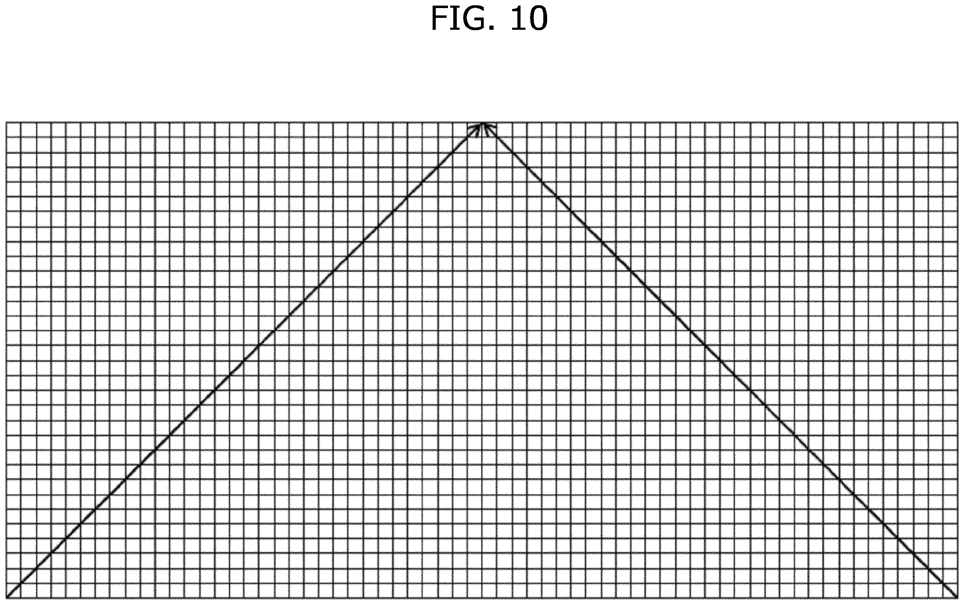

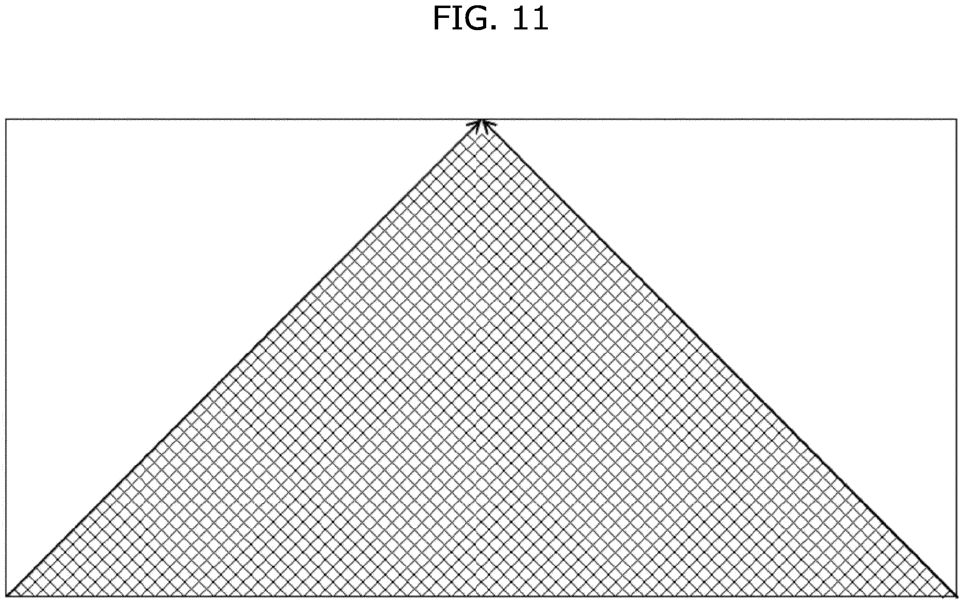

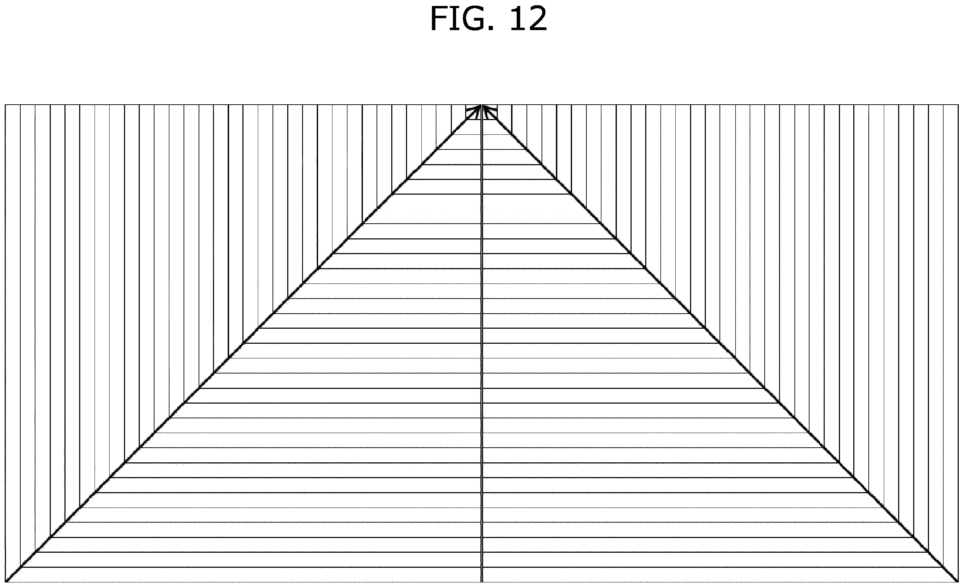

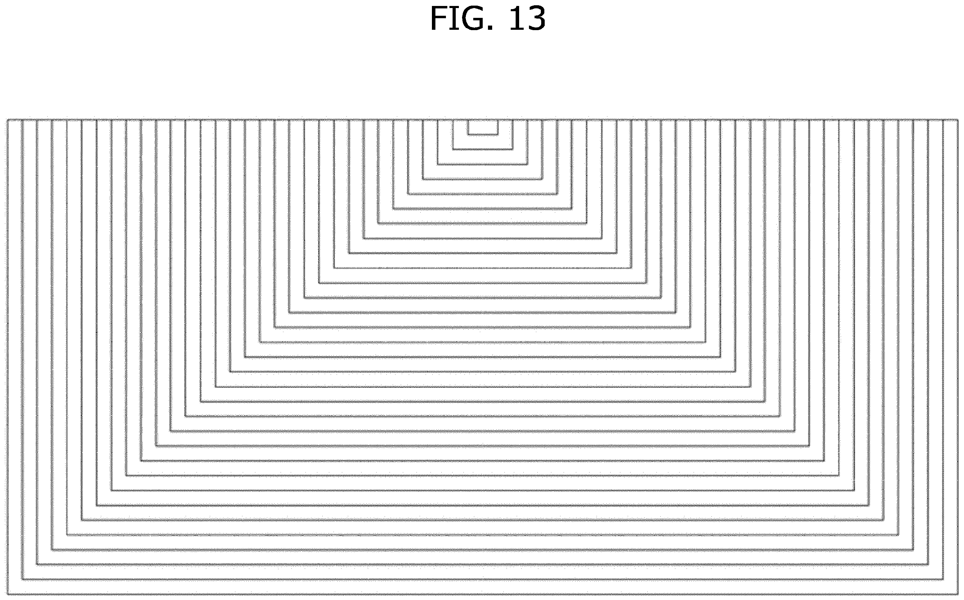

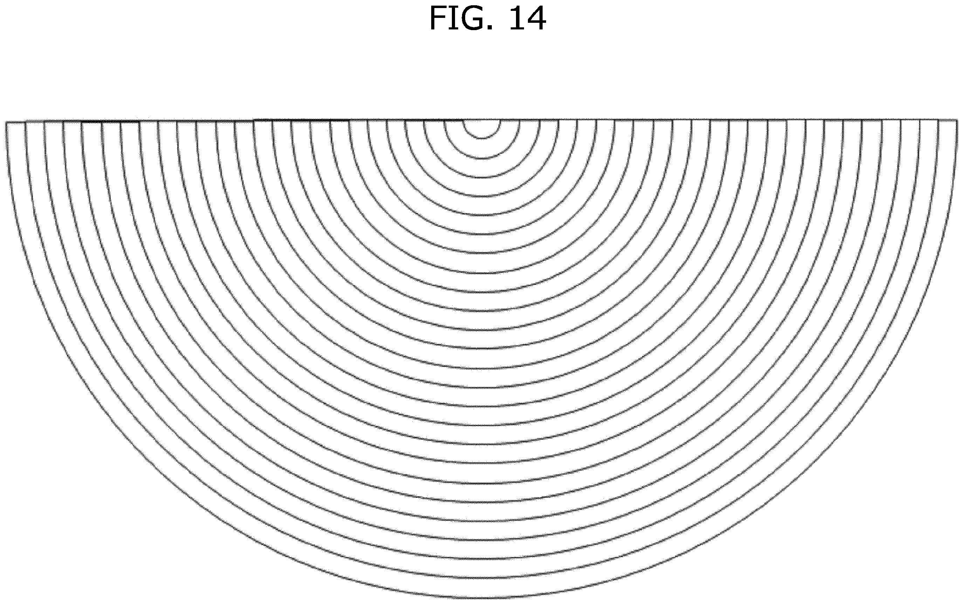

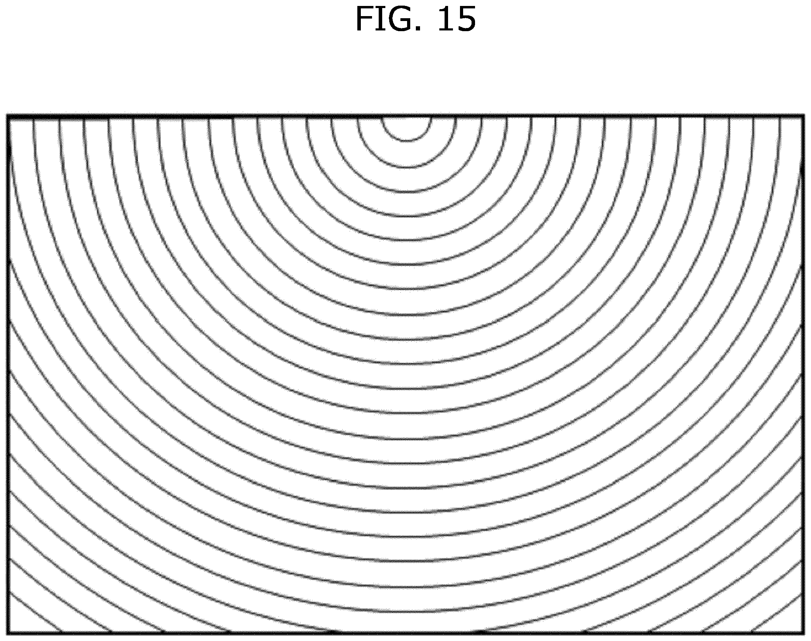

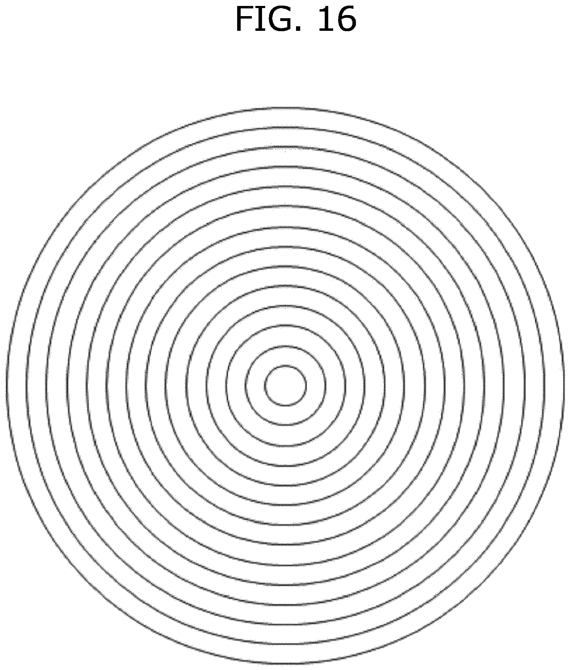

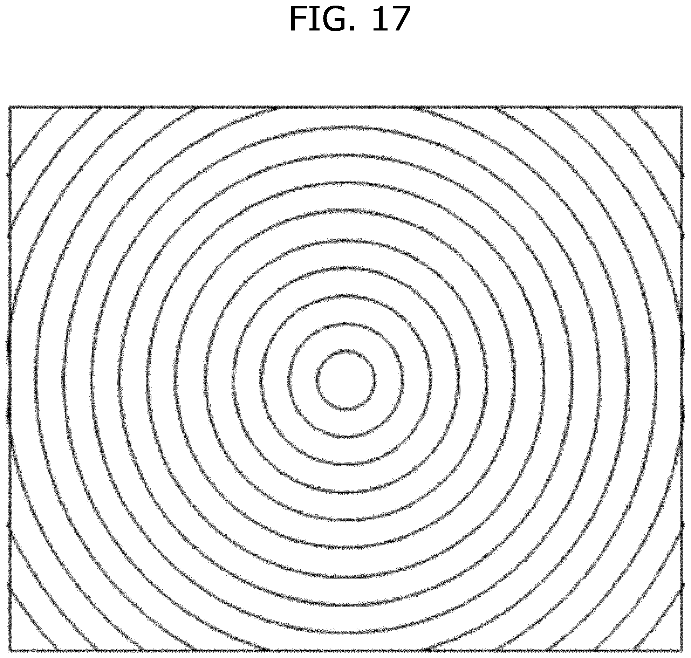

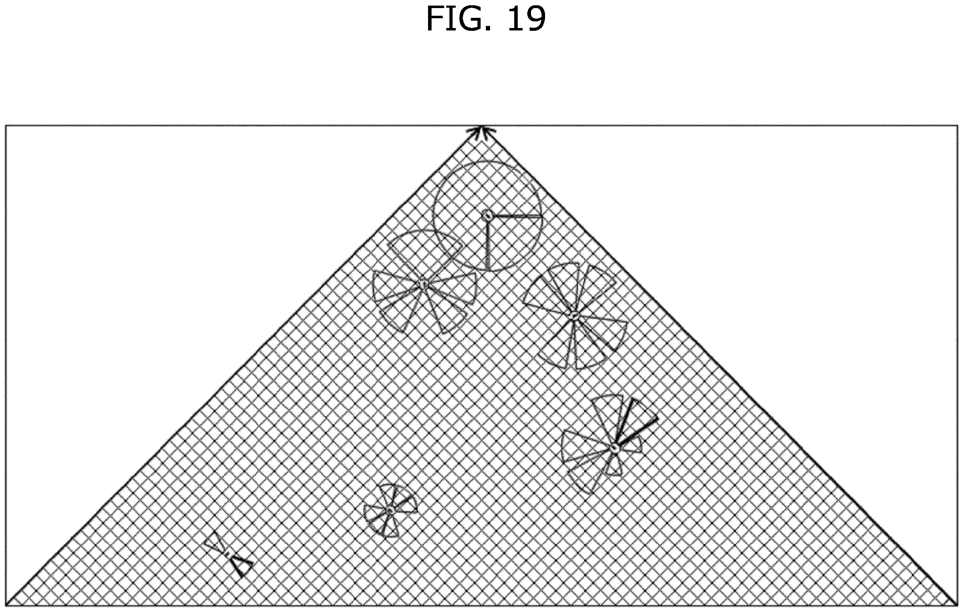

A chart graphically representing an inclusion relation and/or an association of embodiments with respect to the scope of a plurality of patent claims (a patent strategy chart) is illustrated in FIG. 19. Basically, the approximate fan shape representing the scope of the patent claims (the second display) and the point representing the embodiments or the character, the figure, or the like that can be approximate to the point (the first display) associated therewith are disposed, on the basis of the same rule as that in the preparation of the chart illustrated in FIG. 18. An example of the method for setting the coordinates is illustrated in FIG. 8 to FIG. 17, but the method is not limited thereto, and various aspects can be exemplified. The index is not limited to a quantitative index that is represented by a number, such as time, quantity, or a ratio, or may be a qualitative index that is represented from the viewpoint of technical characteristics, from the viewpoint of legal jurisdiction, or from the viewpoint of being used in framework such as business or marketing. In addition, in a case where the position is not considered in analysis, a region without having the coordinates may be entirely or partially provided in accordance with the object of the chart, and the approximate fan shape representing the scope of the patent claims (the second display) and the point representing the embodiments or the character, the figure, or the like that can be approximate to the point (the first display) associated therewith may be disposed.

### <Example 3: Example in Which Two-Dimensional Figure Representing Scope of Plurality Patent Claims and Embodiments Is Disposed on Plane in Which Coordinates Including Concentric Semicircles Are Provided>

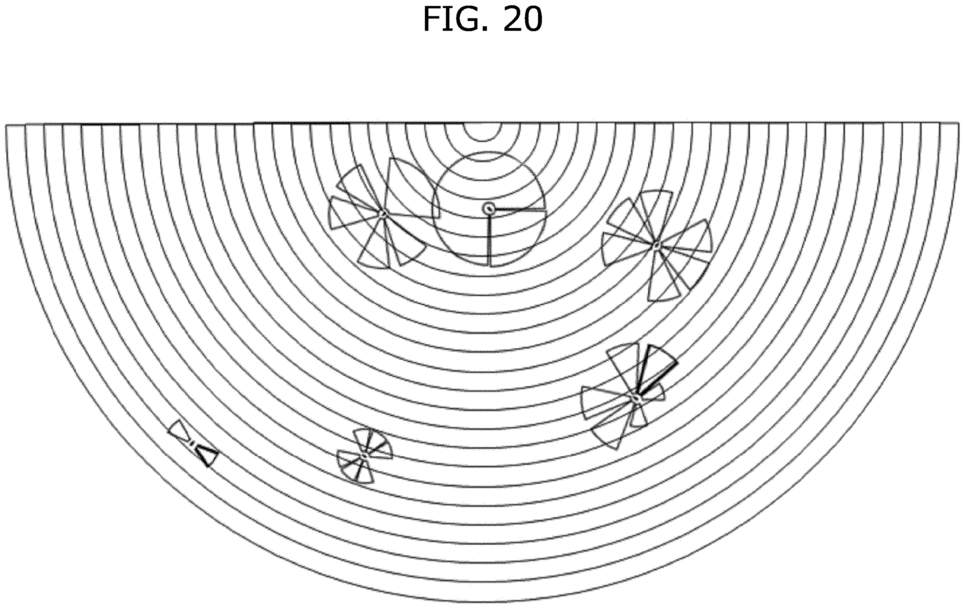

A chart graphically representing an inclusion relation and/or an association of embodiments with respect to the scope of a plurality of patent claims (a patent strategy chart) is illustrated in FIG. 20. It is preferable that coordinates including concentric semicircles or concentric circles are used in a case where the center is in a high position, and the periphery is in a low position, or vice versa, as with a contour line in a topographical chart.

### <Example 4: Case Example in Which Patent Strategy Chart of Present Invention Is Prepared in Field of Ophthalmic Solution for Allergy That Is OTC Drugs (So-Called Non-Prescription Drugs)>

The patent strategy chart of the present invention was prepared in a procedure including the following steps.

Step 1) A product field that is an analysis target and a technical field associated with the product are set.

The product field that is an analysis target is set to the field of an ophthalmic solution for an allergy that is OTC drugs (so-called non-prescription drugs).

Step 2) Information of embodiments belonging to the product field is collected.

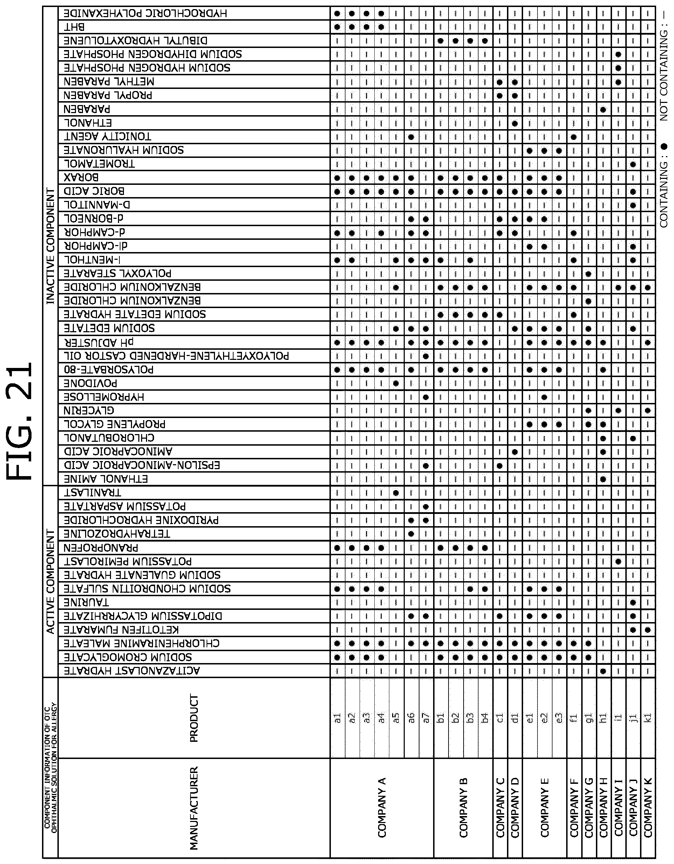

Information relevant to a manufacturer and a component of the ophthalmic solution for an allergy that is OTC drugs (so-called non-prescription drugs) on sale is collected from "2018-19 Japan OTC Drugs Dictionary 16th Edition" edited by Japan Self-Medication Information Study Group, edited and collaborated by Japan Self-Medication Industry, Issuing Office: Jiho, Inc., issued on April 15, 2018, as the product-related information, which is shown in FIG. 21.

Step 3) A patent and a patent application belonging to the technical field are extracted.

Searching was performed by using a patent database, in a condition of "FI = A61K9/08" and "patentee = Manufacturer Extracted from Product-Related Information" and "Including Allergy or Pollen in Claims as Keyword", and 11 patents having a subsisting patent right were extracted.

Step 4) The scope of patent claims of each of the extracted patents or patent applications is divided into groups for each invention including independent claims and dependent claims thereof.

The scope of the patent claims was divided into groups with respect to each of the patents for each of the inventions including the independent claims and the dependent claims thereof.

Step 5) In each of the claims, a wording is segmented for each constituent.

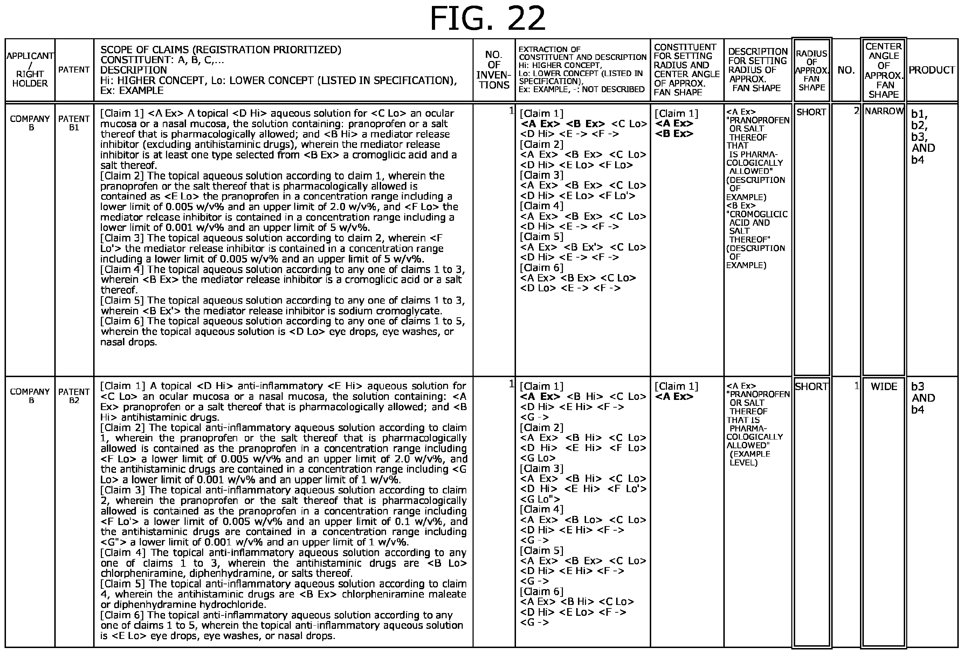

In each of the claims, the wording was segmented for each of the constituents. Hereinafter, FIG. 22 shows a case example in which processing to Step 9 is performed with respect to a patent of a company B shown in FIG. 21.

Step 6) Each of the constituents is sorted into three levels of higher concept, lower concept listed in the specification, and specific description in examples, in accordance with the degree of abstractiveness of the description.

Each of the constituents was sorted into three levels of the higher concept, the lower concept listed in the specification, and the specific description in examples, in accordance with the degree of abstractiveness of the description.

Step 7) In the constituents of a claim having the broadest range in each of the inventions divided into the groups, information with respect to which of the levels a constituent with the lowest degree of abstractiveness corresponds and the number of constituents with the same level is extracted.

In the constituents of claim 1 having the broadest range in each of the inventions divided into the groups, the constituent with the lowest degree of abstractiveness was the specific description in the examples. Specifically, "pranoprofen or a salt thereof that is pharmacologically allowed" of a constituent A and a "cromoglicic acid and a salt thereof" of a constituent B corresponded to the specific description in the examples, and the number thereof was 2.

Step 8) In expressing the scope of the patent claims by the approximate fan shape (the second display), the radius length of the approximate fan shape was sequentially set to any of "Long", "Medium", and "Short", corresponding to three levels of the higher concept, the lower concept, and the specific description in the examples.

As described above, the constituent having the lowest degree of abstractiveness corresponded to the level of the specific description in the examples, and thus, the radius length of the approximate fan shape (the second display) was set to "Short", corresponding thereto.

Step 9) Further, when the number of constituents having the lowest degree of abstractiveness of the description is 1, the center angle of the approximate fan shape is set to "Wide", and when the number of constituents having the same degree is greater than or equal to 2, the center angle of the approximate fan shape (the second display) is set to "Narrow".

As described above, in a patent B1, the constituent with the lowest degree of abstractiveness corresponded to the level of the specific description in the examples, and the number thereof was 2, and thus, the center angle of the approximate fan shape (the second display) was set to "Narrow", corresponding thereto. In a patent B2, the constituent with the lowest degree of abstractiveness corresponded to the level of the specific description in the examples, and the number thereof was 1, and thus, the center angle of the approximate fan shape (the second display) was set to "Wide", corresponding thereto.

Step 10) In a case where a patentee or an applicant of one patent is identical to a practitioner of one embodiment, the center angle of the approximate fan shape representing the scope of the patent claims (the second display) is disposed to overlap with the point representing the embodiments or the character, the figure, or the like that can be approximate to the point (the first display) or to be in a position close thereto. Here, when there are a plurality of approximate fan shapes (second displays), the plurality of second displays are radially disposed.

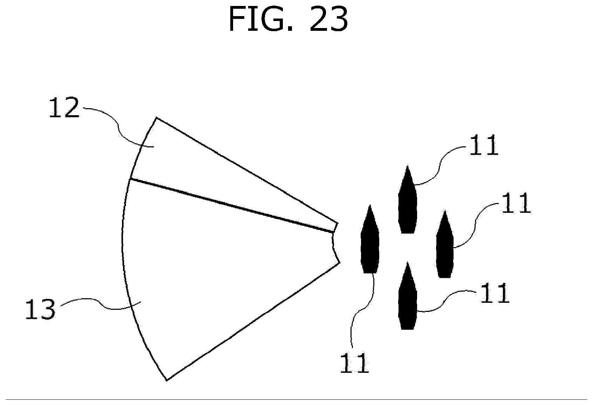

FIG. 23 illustrates that products b1, b2, b3, and b4 of the company B, and the patent B1 and the patent B2 are represented by a figure.

Step 11) On the other hand, in a case where the practitioner is a third party, when the embodiments are included in the scope of the patent claims, the point or the like representing the embodiments (the first display) is disposed to be positioned inside the approximate fan shape representing the scope of the patent claims (the second display), and when the embodiments are not included in the scope of the patent claims, the point or the like representing the embodiments (the first display) is disposed to be positioned outside the approximate fan shape representing the scope of the patent claims (the second display) . At this time, in a case where there is one constituent that is not included in the embodiments, the first display is disposed at a short distance, and is disposed at a long distance as the number of constituents that are not included in the embodiments increases. In addition, assuming that the constituents of the invention are expanded by the higher concept, in a case where the embodiments correspond to the range, the point or the like representing the embodiments is disposed on a straight line extending through one point on a circular arc from the vertex of the center angle of the approximate fan shape (the second display) corresponding to the invention.

Step 12) Two-dimensional coordinates set by an arbitrary index in the product field and the technical field are set, and the point or the like representing the embodiments (the first display) and the approximate fan shape representing the patent and/or the patent application (the second display) are disposed on the basis of information of the embodiments belonging to the product field and information of the patent and/or the patent application associated with the technical field.

Here, in Step 11 and Step 12, the disposition can be considered by using a sticky note, a model, a piece, and pattern paper.

Specifically, a patent strategy chart component may be produced by using the sticky note, the model, the piece, and the pattern paper, in accordance with a collage technique or a paste technique. More specifically, the figure representing the embodiments (the first display) is formed as a first member having a ship shape, and the approximate fan shape representing the scope of the patent claims (the second display) is formed as a second member. Then, the first member and the second member are disposed and linked such that the first member having a ship shape is in contact with a fan-shaped center angle of the second member, and a fan-shaped (inner) circular arc of the second member is not in contact with the first member having a ship shape.

Here, in Step 11 and Step 12, it is more desirable to use manipulativeness of computer software such as Microsoft (Registered Trademark) Office PowerPoint. A manipulation such as finely adjusting a length, an angle, and a position by inputting a numerical value, replicating or moving a plurality of figures by grouping, comparing the before and after by returning the manipulation, or retaining the state or result in the middle is unique to the computer software. Such manipulativeness greatly affects the finished result reflecting in-depth consideration.

Step 13) Further, an auxiliary line, a code, and a figure representing a peripheral situation (a third display) are arbitrarily disposed.

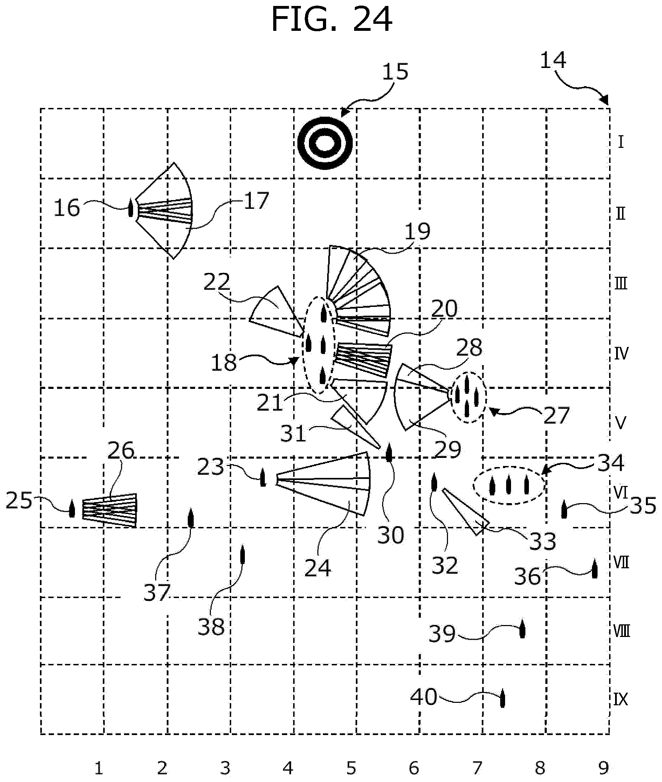

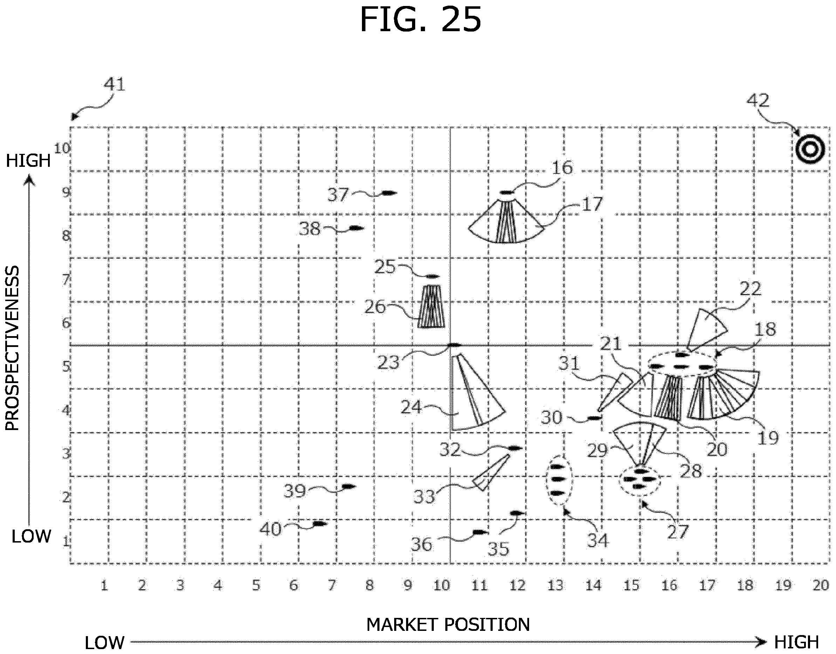

FIG. 24 and FIG. 25 illustrate that the entire chart is prepared by analyzing product-related information and patent-related information other than the company B and by also adding Steps 11, 12, and 13.

In the chart displayed by the digital unit graphically representing the inclusion relation and/or the association of the embodiments with respect to the scope of the patent claims, arbitrarily including the point representing the embodiments or an arbitrary character and/or an arbitrary figure that can be approximate to the point (the first display), the approximate fan shape representing the scope of the patent claims (the second display), the coordinates including an arbitrary coordinate axis, and the auxiliary line, the code, and the figure representing the peripheral situation (the third display), which is prepared in the procedure described above, in a case where the point or an arbitrary character and/or an arbitrary figure that can be approximate to the point (the first display) is linked with the product-related information (the manufacturer, the raw material, the component, the configuration, and the like), stored in another application, the approximate fan shape (the second display) is linked with the patent-related information (the application information, the progress information, the registration information, the publication information, and the like), stored in another application, and the product-related information and the patent-related information are configured as a database, it is useful as a management system for managing the product and the patent information. A conceptual diagram thereof is illustrated in FIG. 26.

### <Example 5: Case Example in Which Patent Strategy Chart of Present Invention Is Prepared Plurality of Times in Chronological Order to Be Animation Video, in Field of PET Bottled Green Tea Beverages>

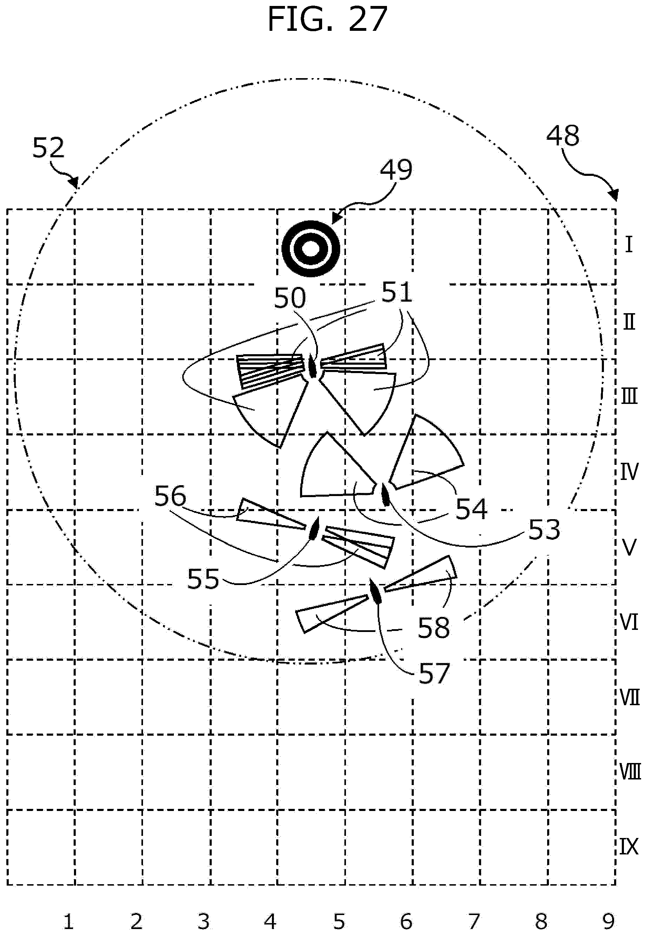

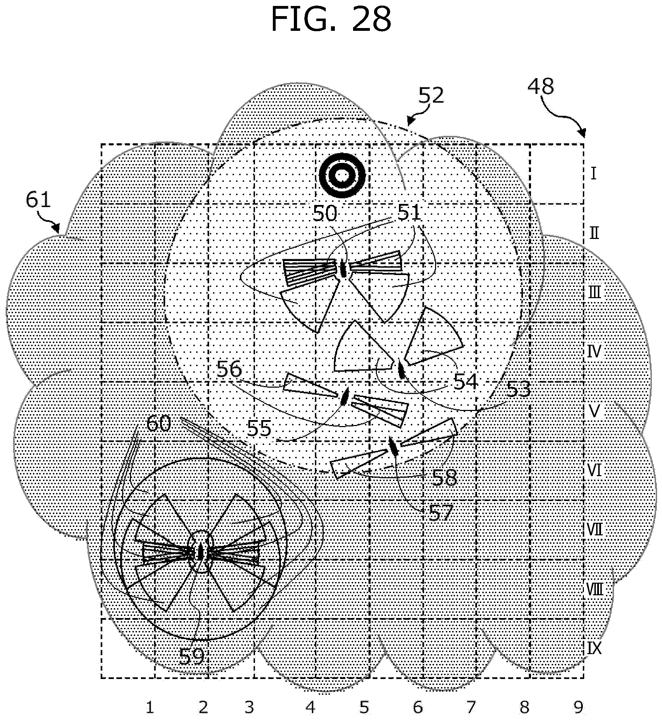

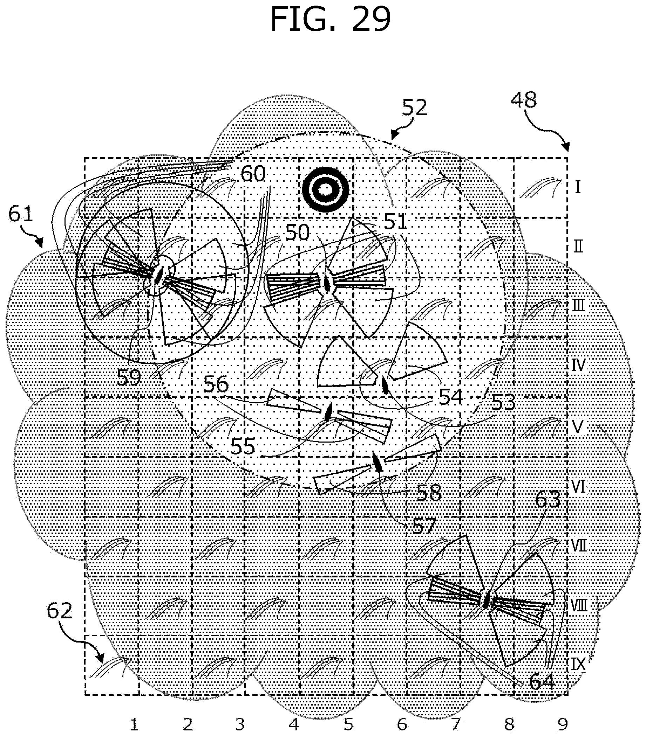

In a case where the patent strategy chart is prepared a plurality of times over time, in the same procedure as that described in Example 4, a collection of charts having a change, as illustrated in FIG. 27, FIG. 28, FIG. 29, and FIG. 30, is assumed. FIG. 27 to FIG. 30 are image diagrams not based on specific analysis of each of the patents. A change in each element in the chart (that is, the presence or absence, the position, the size, the direction, and the like of the point or an arbitrary character and/or an arbitrary figure or the like that can be approximate to the point (the first display), the approximate fan shape (the second display), the auxiliary line, the code, and the figure (the third display)) can be displayed as a continuous animation video by using the computer program.

Four patent strategy charts (image diagrams) described above were edited to four slides by using Microsoft (Registered Trademark) Office PowerPoint, and were continuously displayed at intervals of 1 second by using a slide show function. One animation video was produced with an effect of aiding the switching of a continuous image, by also using the fade of screen switching or the display of a temporal axis representing a temporal sequence. Accordingly, the background of a situation change in the product of the field and the patent associated therewith was capable of being recognized for a short period of time, over time with a crow's nest view.

Note that, patent information standard data is released from Japan Patent Office at a frequency of once a week, and data is updated at the same frequency even in a commercial database in Japan. On the basis of such an information source, a patent strategy chart reflecting a change point at a frequency of once a week can be produced and accumulated. The updating is continuously performed, and thus, a worker is capable of monitoring a situation change, and is capable of sharing information with a relevant party.

### INDUSTRIAL APPLICABILITY

According to the present invention, the entire image of a complicated situation caused by a case where there are a plurality of competitive products that are manufactured and sold by the third party or a plurality of patents that are held by the third party can be grasped for a short period of time, and the present invention can be used in a process for planning and developing a management strategy or a business strategy in a research and development company, a research institution, or the like. In addition, the chart obtained as a deliverable can be interlocked with the database for processing the product-related information and the patent-related information, and can also be used as the management system for the product-related information and the patent-related information.

Further, a change in each element in the chart (that is, the presence or absence, the position, the size, the direction, and the like of the point or an arbitrary character and/or an arbitrary figure or the like that can be approximate to the point, the approximate fan shape, the auxiliary line, the code, and the figure) is displayed as a continuous animation video by using the computer program, on the plurality of patent strategy charts prepared a plurality of times over time, and thus, the background of a situation change in the product of the field and the patent associated therewith can be recognized for a short period of time, over time with a crow's nest view.

### REFERENCE SIGNS LIST

1: FAN SHAPE REPRESENTING SCOPE OF PATENT CLAIMS HAVING RADIUS LENGTH OF "LONG" AND CENTER ANGLE OF "WIDE" (SECOND DISPLAY)
2a: FAN SHAPE REPRESENTING SCOPE OF PATENT CLAIMS HAVING RADIUS LENGTH OF "MEDIUM" AND CENTER ANGLE OF "WIDE" (SECOND DISPLAY)
2b: FAN SHAPE REPRESENTING SCOPE OF PATENT CLAIMS HAVING RADIUS LENGTH OF "MEDIUM" AND CENTER ANGLE OF "NARROW" (SECOND DISPLAY)
3a: FAN SHAPE REPRESENTING SCOPE OF PATENT CLAIMS HAVING RADIUS LENGTH OF "SHORT" AND CENTER ANGLE OF "WIDE" (SECOND DISPLAY)
3b: FAN SHAPE REPRESENTING SCOPE OF PATENT CLAIMS HAVING RADIUS LENGTH OF "SHORT" AND CENTER ANGLE OF "NARROW" (SECOND DISPLAY)
4: CIRCLE REPRESENTING EMBODIMENT (FIRST DISPLAY)
5: SYMBOL REPRESENTING EMBODIMENT (FIRST DISPLAY)
6: APPROXIMATE FAN SHAPE REPRESENTING SCOPE OF PATENT CLAIMS HAVING RADIUS LENGTH OF "LONG" AND CENTER ANGLE OF "WIDE" (SECOND DISPLAY)
7a: APPROXIMATE FAN SHAPE REPRESENTING SCOPE OF PATENT CLAIMS HAVING RADIUS LENGTH OF "MEDIUM" AND CENTER ANGLE OF "WIDE" (SECOND DISPLAY)
7b: APPROXIMATE FAN SHAPE REPRESENTING SCOPE OF PATENT CLAIMS HAVING RADIUS LENGTH OF "MEDIUM" AND CENTER ANGLE OF "NARROW" (SECOND DISPLAY)
8a: APPROXIMATE FAN SHAPE REPRESENTING SCOPE OF PATENT CLAIMS HAVING RADIUS LENGTH OF "SHORT" AND CENTER ANGLE OF "WIDE" (SECOND DISPLAY)
8b: APPROXIMATE FAN SHAPE REPRESENTING SCOPE OF PATENT CLAIMS HAVING RADIUS LENGTH OF "SHORT" AND CENTER ANGLE OF "NARROW" (SECOND DISPLAY)
9: SHIP-SHAPED FIGURE REPRESENTING EMBODIMENT (FIRST DISPLAY)
10: APPROXIMATE FAN SHAPE REPRESENTING SCOPE OF PATENT CLAIMS HAVING RADIUS LENGTH OF "LONG" AND CENTER ANGLE OF "NARROW" (SECOND DISPLAY)
11: SHIP-SHAPED FIGURE GROUP REPRESENTING FOUR EMBODIMENTS (FIRST DISPLAY)
12: APPROXIMATE FAN SHAPE REPRESENTING SCOPE OF PATENT CLAIMS OF ONE PATENT ASSOCIATED WITH FOUR EMBODIMENTS (SECOND DISPLAY)
13: APPROXIMATE FAN SHAPE REPRESENTING SCOPE OF PATENT CLAIMS OF ANOTHER PATENT ASSOCIATED WITH FOUR EMBODIMENTS (SECOND DISPLAY)
14: SHOGI BOARD TYPE COORDINATES (TWO-DIMENSIONAL PLANE)
15: CODE REPRESENTING HIGHEST POSITION IN SHOGI BOARD TYPE COORDINATES
16: SHIP-SHAPED FIGURE REPRESENTING PRODUCT a1 OF COMPANY A (FIRST DISPLAY)
17: APPROXIMATE FAN SHAPE REPRESENTING SCOPE OF PATENT CLAIMS OF PATENT A1 ASSOCIATED WITH PRODUCT a1 OF COMPANY A (SECOND DISPLAY)
18: SHIP-SHAPED FIGURE GROUP REPRESENTING PRODUCTS a2, a3, a4, AND a5 OF COMPANY A (FIRST DISPLAY)
19: APPROXIMATE FAN SHAPE REPRESENTING SCOPE OF PATENT CLAIMS OF PATENT A2 ASSOCIATED WITH OF PRODUCTS a2, a3, a4, AND a5 OF COMPANY A (SECOND DISPLAY)
20 : APPROXIMATE FAN SHAPE REPRESENTING SCOPE OF PATENT CLAIMS OF PATENT A3 ASSOCIATED WITH PRODUCTS a2, a3, a4, AND a5 OF COMPANY A (SECOND DISPLAY)
21: APPROXIMATE FAN SHAPE REPRESENTING SCOPE OF PATENT CLAIMS OF PATENT A4 ASSOCIATED WITH PRODUCTS a2, a3, a4, AND a5 OF COMPANY A (SECOND DISPLAY)
22: APPROXIMATE FAN SHAPE REPRESENTING SCOPE OF PATENT CLAIMS OF PATENT A5 ASSOCIATED WITH PRODUCTS a2, a3, a4, AND a5 OF COMPANY A (SECOND DISPLAY)
23: SHIP-SHAPED FIGURE REPRESENTING PPRODUCT a6 OF COMPANY A (FIRST DISPLAY)
24: APPROXIMATE FAN SHAPE REPRESENTING SCOPE OF PATENT CLAIMS OF PATENT A6 ASSOCIATED WITH PPRODUCT a6 OF COMPANY A (SECOND DISPLAY)
25: SHIP-SHAPED FIGURE REPRESENTING PRODUCT a7 OF COMPANY A (FIRST DISPLAY)
26: APPROXIMATE FAN SHAPE REPRESENTING SCOPE OF PATENT CLAIMS OF PATENT A7 ASSOCIATED WITH PRODUCT a7 OF COMPANY A (SECOND DISPLAY)
27: SHIP-SHAPED FIGURE GROUP REPRESENTING PRODUCTS b1, b2, b3, AND b4 OF COMPANY B (FIRST DISPLAY)
28: APPROXIMATE FAN SHAPE REPRESENTING SCOPE OF PATENT CLAIMS OF PATENT B1 ASSOCIATED WITH PRODUCTS b1, b2, b3, AND b4 OF COMPANY B (SECOND DISPLAY)
29: APPROXIMATE FAN SHAPE REPRESENTING SCOPE OF PATENT CLAIMS OF PATENT B2 ASSOCIATED WITH PRODUCTS b1, b2, b3, AND b4 OF COMPANY B (SECOND DISPLAY)
30: SHIP-SHAPED FIGURE REPRESENTING PRODUCT c1 OF COMPANY C (FIRST DISPLAY)
31: APPROXIMATE FAN SHAPE REPRESENTING SCOPE OF PATENT CLAIMS OF PATENT C1 ASSOCIATED WITH PRODUCT c1 OF COMPANY C (SECOND DISPLAY)
32: SHIP-SHAPED FIGURE REPRESENTING PRODUCT d1 OF COMPANY D (FIRST DISPLAY)
33: APPROXIMATE FAN SHAPE REPRESENTING SCOPE OF PATENT CLAIMS OF PATENT D1 ASSOCIATED WITH PRODUCT d1 OF COMPANY D (SECOND DISPLAY)
34: SHIP-SHAPED FIGURE REPRESENTING PRODUCTS e1, e2, AND e3 OF COMPANY E (FIRST DISPLAY)
35: SHIP-SHAPED FIGURE REPRESENTING PRODUCT f1 OF COMPANY F (FIRST DISPLAY)
36: SHIP-SHAPED FIGURE REPRESENTING PRODUCT g1 OF COMPANY G (FIRST DISPLAY)
37: SHIP-SHAPED FIGURE REPRESENTING PRODUCT h1 OF COMPANY H (FIRST DISPLAY)
38: SHIP-SHAPED FIGURE REPRESENTING PRODUCT i1 OF COMPANY I (FIRST DISPLAY)
39: SHIP-SHAPED FIGURE REPRESENTING PRODUCT j1 OF COMPANY J (FIRST DISPLAY)
40: SHIP-SHAPED FIGURE REPRESENTING PRODUCT k1 OF COMPANY K (FIRST DISPLAY)
41: 4-SPLIT MATRIX TYPE COORDINATES (TWO-DIMENSIONAL PLANE)
42: CODE REPRESENTING HIGHEST POSITION IN 4-SPLIT MATRIX TYPE POSITIONING CHART COORDINATES
43: DATABASE
44 : PRODUCT INFORMATION DATA THAT CAN BE ACCESSED BY CLICKING SHIP-SHAPED FIGURE REPRESENTING PRODUCT b3 OF COMPANY B ON COMPUTER SCREEN
45: ANALYSIS INFORMATION DATA OF PRESENT INVENTION THAT CAN BE ACCESSED BY CLICKING APPROXIMATE FAN SHAPE REPRESENTING SCOPE OF PATENT CLAIMS OF PATENT B2 ASSOCIATED WITH PRODUCT GROUP INCLUDING PRODUCTS b1, b2, b3, AND b4 OF COMPANY B ON COMPUTER SCREEN
46: PROGRESS INFORMATION DATA OF PATENT B2 THAT CAN BE ACCESSED BY CLICKING APPROXIMATE FAN SHAPE REPRESENTING SCOPE OF PATENT CLAIMS OF PATENT B2 ASSOCIATED WITH PRODUCT GROUP INCLUDING PRODUCTS b1, b2, b3, AND b4 OF COMPANY B ON COMPUTER SCREEN
47 : PATENT PUBLICATION DATA OF PATENT B2 THAT CAN BE ACCESSED BY CLICKING APPROXIMATE FAN SHAPE REPRESENTING SCOPE OF PATENT CLAIMS OF PATENT B2 ASSOCIATED WITH PRODUCT GROUP INCLUDING PRODUCTS b1, b2, b3, AND b4 OF COMPANY B ON COMPUTER SCREEN
48: SHOGI BOARD TYPE COORDINATES (TWO-DIMENSIONAL PLANE)
49: CODE REPRESENTING HIGHEST POSITION IN SHOGI BOARD TYPE COORDINATES
50: SHIP-SHAPED FIGURE REPRESENTING PRODUCT 11 OF COMPANY L (FIRST DISPLAY)
51: APPROXIMATE FAN SHAPE GROUP REPRESENTING SCOPE OF PATENT CLAIMS OF PATENT GROUP ASSOCIATED WITH PRODUCT 11 OF COMPANY L (SECOND DISPLAY)
52: CIRCULAR AUXILIARY LINE CONCEPTUALLY REPRESENTING RANGE TO BE RECOGNIZED AS COMPETITOR FROM PERSPECTIVE OF COMPANY L (THIRD DISPLAY)
53: SHIP-SHAPED FIGURE REPRESENTING PRODUCT m1 OF COMPANY M (FIRST DISPLAY)
54: APPROXIMATE FAN SHAPE GROUP REPRESENTING SCOPE OF PATENT CLAIMS OF PATENT GROUP ASSOCIATED WITH PRODUCT m1 OF COMPANY M (SECOND DISPLAY)
55: SHIP-SHAPED FIGURE REPRESENTING PRODUCT n1 OF COMPANY N (FIRST DISPLAY)
56: APPROXIMATE FAN SHAPE GROUP REPRESENTING SCOPE OF PATENT CLAIMS OF PATENT GROUP ASSOCIATED WITH PRODUCT n1 OF COMPANY N (SECOND DISPLAY)
57: SHIP-SHAPED FIGURE REPRESENTING PRODUCT o1 OF COMPANY O (FIRST DISPLAY)
58: APPROXIMATE FAN SHAPE GROUP REPRESENTING SCOPE OF PATENT CLAIMS OF PATENT GROUP ASSOCIATED WITH PRODUCT o1 OF COMPANY O (SECOND DISPLAY)
59: SHIP-SHAPED FIGURE REPRESENTING PRODUCT p1 OF COMPANY P (FIRST DISPLAY)
60: APPROXIMATE FAN SHAPE GROUP REPRESENTING SCOPE OF PATENT CLAIMS OF PATENT GROUP ASSOCIATED WITH PRODUCT p1 OF COMPANY P (SECOND DISPLAY)
61: FIGURE WITH FOG MOTIF EXPRESSING UNCLEAR SITUATION DUE TO UNSTABLE FACTOR SUCH AS CONTROVERSY RELEVANT TO PATENT SYSTEM (THIRD DISPLAY)
62: FIGURE WITH WAVE MOTIF EXPRESSING DIFFICULT SITUATION TO ADDRESS DUE TO CHANGE IN LEGAL SYSTEM ASSOCIATED WITH PRODUCT NOT LIMITED TO PATENT SYSTEM (THIRD DISPLAY)
63: SHIP-SHAPED FIGURE REPRESENTING PRODUCT q1 OF COMPANY Q
64: APPROXIMATE FAN SHAPE GROUP REPRESENTING SCOPE OF PATENT CLAIMS OF PATENT GROUP ASSOCIATED WITH PRODUCT q1 OF COMPANY Q (SECOND DISPLAY)
65: FIGURE REPRESENTING THAT EXECUTION OF RIGHT HAS BEEN LEGALLY PERFORMED OR IS IN CONTROVERSY (THIRD DISPLAY)

## Claims

1. A patent strategy chart graphic representation method, comprising:
a) a group display generating step of generating a group display in which a first display representing embodiments and a second display representing a scope of patent claims are grouped;
b) a two-dimensional plane display generating step of generating a two-dimensional plane display with an arbitrary index as coordinates; and
c) a group display disposing step of disposing and displaying the group display on the two-dimensional plane display by reflecting product information associated with the embodiments,
wherein the first display includes at least one of a character and a figure,
the second display has an approximate fan shape, and
the patent strategy chart represents an inclusion relation and/or an association of the embodiments with respect to the scope of the patent claims.

2. The patent strategy chart graphic representation method according to claim 1, further comprising:
d) a peripheral situation displaying step of displaying a third display representing a peripheral situation relevant to the embodiments on the two-dimensional plane display.

3. A digital system for assisting a patent strategy chart graphic representation, comprising:
a) a group display generation unit that generates a group display in which a first display representing embodiments and a second display representing a scope of patent claims are grouped;
b) a two-dimensional plane display generation unit that generates a two-dimensional plane display with an arbitrary index as coordinates; and
c) a group display disposition unit that disposes and displays the group display on the two-dimensional plane display by reflecting product information associated with the embodiments,
wherein the first display includes at least one of a character and a figure,
the second display has an approximate fan shape, and
the patent strategy chart represents an inclusion relation and/or an association of the embodiments with respect to the scope of the patent claims.

4. A patent strategy chart representing an inclusion relation and/or an association of embodiments with respect to a scope of patent claims, the chart comprising:
a first display representing the embodiments;
a second display representing the scope of the patent claims; and
a two-dimensional plane with an arbitrary index as coordinates,
wherein the first display includes at least one of a character and a figure, and
the second display has an approximate fan shape.

5. A patent strategy chart generation method, the patent strategy chart including a first display representing embodiments, a second display representing a scope of patent claims, and a two-dimensional plane with an arbitrary index as coordinates, the method comprising:
a) a group display generating step of generating a group display in which the first display and the second display are grouped;
b) a two-dimensional plane display generating step of generating the two-dimensional plane; and
c) a group display disposing step of disposing and displaying the group display on the two-dimensional plane by reflecting product information associated with the embodiments,
wherein the first display includes at least one of a character and a figure,
the second display has an approximate fan shape, and
the patent strategy chart represents an inclusion relation and/or an association of the embodiments with respect to the scope of the patent claims.

6. A management system for product-related information of a plurality of practitioners and patent-related information of a plurality of patentees and patent applicants, the system comprising:
a database that links a first display with the product-related information including information relevant to one or two or more selected from the group consisting of a manufacturer, a raw material, a component configuration, and a structure, stored in another application,
links a second display with the patent-related information including application information, progress information, registration information, or publication information, stored in another application, and
further processes the product-related information and the patent-related information, in a patent strategy chart displayed by a digital unit including the first display representing embodiments, the second display representing a scope of patent claims, and a two-dimensional plane with an arbitrary index as coordinates,
wherein the first display includes at least one of a character and a figure, and the second display has an approximate fan shape.

7. A computer program for producing an animation video of a patent strategy chart representing an inclusion relation and/or an association of embodiments with respect to a scope of patent claims,
wherein the patent strategy chart includes a first display representing the embodiments, a second display representing the scope of the patent claims, and a two-dimensional plane with an arbitrary index as coordinates,
the first display includes at least one of a character and a figure,
the second display has an approximate fan shape, and
a change relevant to a position, a size, and a direction of the first display and the second display on the two-dimensional plane is continuously displayed as an animation video, on a plurality of patent strategy charts prepared a plurality of times over time with respect to a predetermined technical field.

8. A patent strategy chart component based on a collage technique or a paste technique,
wherein a first member having a ship shape and one or two or more second members having a fan shape are disposed and linked such that the first member having a ship shape is in contact with a center angle of the second member having a fan shape, and a fan-shaped circular arc of the second member having a fan shape is not in contact with the first member having a ship shape.
